(19) Europäisches Patentamt
European Patent Office
Office européen des brevets

(11) EP 2 219 996 B1

# (12) EUROPÄISCHE PATENTSCHRIFT

(45) Veröffentlichungstag und Bekanntmachung des Hinweises auf die Patenterteilung:
**14.12.2011 Patentblatt 2011/50**

(21) Anmeldenummer: **08854777.3**

(22) Anmeldetag: **24.10.2008**

(51) Int Cl.:
***C01B 33/12*** *(2006.01)* ***C01B 33/143*** *(2006.01)*
***C01B 33/18*** *(2006.01)* ***C01B 33/187*** *(2006.01)*
***C01B 33/193*** *(2006.01)*

(86) Internationale Anmeldenummer:
**PCT/EP2008/064413**

(87) Internationale Veröffentlichungsnummer:
**WO 2009/068379 (04.06.2009 Gazette 2009/23)**

## (54) NEUE FÄLLUNGSKIESELSÄURE ZUR VERDICKUNG UND ERZEUGUNG VON THIXOTROPEM VERHALTEN IN FLÜSSIGEN SYSTEMEN

NOVEL PRECIPITATED SILICIC ACID FOR THICKENING AND GENERATING A THIXOTROPIC BEHAVIOR IN LIQUID SYSTEMS

NOUVEL ACIDE SILICILIQUE PRÉCIPITÉ PERMETTANT D'OBTENIR UN ÉPAISSISSEMENT ET DE PRODUIRE UN COMPORTEMENT THIXOTROPE DANS DES SYSTÈMES LIQUIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.11.2007 US 944851**

(43) Veröffentlichungstag der Anmeldung:
**25.08.2010 Patentblatt 2010/34**

(73) Patentinhaber: **Evonik Degussa GmbH**
**45128 Essen (DE)**

(72) Erfinder:
- **PANZ, Christian**
  **50389 Wesseling-Berzdorf (DE)**
- **MEIER, Karl**
  **53347 Alfter (DE)**
- **TOTH, James J.**
  **Jersey City**
  **New Jersey 07306 (US)**
- **ROMAINE, Matthew**
  **New Jersey**
  **New Jersey 08823 (US)**
- **SCHOLZ, Mario**
  **63584 Gründau (DE)**
- **TITZ, Guido**
  **52396 Heimbach (DE)**

(56) Entgegenhaltungen:
**EP-A- 1 561 727** **EP-A- 1 860 067**
**DE-A1-102005 005 046**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 219 996 B1

## Beschreibung

TECHNISCHES GEBIET

Die vorliegende Erfindung betrifft neue Fällungskieselsäure zur Verdickung und Bereitstellung von Thixotropie in flüssigen Systemen und ein Verfahren zu ihrer Herstellung. Die neue Fällungskieselsäure zeigt überlegene Effizienz bei der Verdickung und Erzeugung von Thixotropie im Vergleich zu bestehenden Qualitäten von Fällungskieselsäure. Die neue Fällungskieselsäure funktioniert gut als Thixotropiermittel in unpolaren oder mäßig polaren flüssigen Systemen wie ungesättigten Polyesterharzsystemen (UPE-Harzsystemen).

HINTERGRUND DER ERFINDUNG

Es ist gut bekannt, daß hydrophile pyrogen hergestellte Kieselsäure und Fällungskieselsäure in flüssigen Systemen verdickend wirken und Thixotropie erzeugen. Die rheologischen Effekte basieren auf der Bildung von Wasserstoffbrückenbindungen zwischen Silanolgruppen an benachbarten Kieselsäurepartikeln. Hydrophile Kieselsäure hat den größten Verdickungsund Thixotropierungseffekt in unpolaren Flüssigkeiten, d.h. Flüssigkeiten mit einer kleinen Menge inhärenter Wasserstoffbrückenbindungen. Die inhärenten Wasserstoffbrückenbindungen eines flüssigen Mediums können die Bildung von Wasserstoffbrückenbindungen zwischen Silanolgruppen der Kieselsäure stören und den Verdikkungseffekt reduzieren. In mäßig polaren Systemen wie einigen Epoxidharzen ist der Verdickungseffekt immer noch ziemlich stark. In hochpolaren Systemen wie niedermolekularen Alkoholen ist hydrophile Kieselsäure bei der Verdickung und Erzeugung von Thixotropie jedoch sehr ineffizient. Beispiele für flüssige Systeme, in denen hydrophile Kieselsäure am besten verwendet werden kann, sind aliphatische Kohlenwasserstoffe, aromatische Kohlenwasserstoffe, chlorierte Lösungsmittel, Fluorkohlenstoffe, Mineralöle, Terpene, ölmodifizierte Alkydharze, Epoxidharze, hochmolekulare Ester, hochmolekulare Ether, Glykoletherester, ungesättigte Polyester, Silikone, Pflanzenöle und Vinylharze. In einigen Fällen könnte hydrophile Kieselsäure möglicherweise auch in Systemen mit noch höherer Polarität, wie hochmolekularen Alkoholen, hochmolekularen Aldehyden, Alkydharzen, hochmolekularen Amiden, hochmolekularen Aminen, Glykolethern, Polyurethanen, Vinylestern und Thiolen, verwendet werden.

Ungesättigte Polyesterharzsysteme sind eines der gängigsten und wichtigsten flüssigen Harzsysteme, die mit hydrophiler Kieselsäure verdickt werden. Ungesättigte Polyesterzusammensetzungen, bei denen es sich um Polykondensate auf Basis von Glykolen und zweibasigen Säuren handelt, werden bei zahlreichen Anwendungen eingesetzt. Diese ungesättigten Polyesterharze zeigen im wesentlichen Newtonsches Verhalten, d.h. ihre Viskosität ist nicht scherabhängig. Bei vielen der Anwendungen derartiger Harze darf das Harz nicht vor der Härtung von vertikalen Flächen ablaufen und muß andere Eigenschaften mit annehmbarem thixotropem Charakter besitzen, was bedeutet, daß das Harz bei geringer Scherung eine hohe Viskosität und bei hoher Scherung eine viel geringere Viskosität aufweisen sollte und außerdem nicht vor der Härtung von vertikalen Flächen ablaufen darf.

Thixotrope Polyesterharze und Gelcoats finden in der Marineindustrie breite Anwendung als glasfaserverstärkte Kunststoffe für den Schiffsbau. Andere typische Anwendungen für thixotrope Harze sind korrosionsbeständige Produkte, elektrische Bauteile, Badewannen und Duschen, Windräder und Transport. Siehe "Modern Plastics Encyclopedia", 1977-1978, S. 65-66; und 1978-1979, S. 56-59. Dies sind Spezialgebiete, auf denen thixotrope Harze verwendet werden müssen, die die oben aufgeführten Anforderungen an den thixotropen Charakter erfüllen (siehe Connolly, "Modern Plastics Encyclopedia", 1975-1976, S. 61-62).

Die Verwendung von pyrogen hergestellter Kieselsäure in thixotropen ungesättigten Polyesterharzen (UPE-Harzen) ist eine alte und sehr gut bekannte Technik. Ab mindestens den frühen 1980er Jahren ist auch Fällungskieselsäure verwendet worden. Im Jahre 1985 wurde der J. M. Huber Corporation die US-Patentschrift Nr. 4,497,918 zur Verwendung von Kombinationen aus Fällungskieselsäure und pyrogen hergestellter Kieselsäure in thixotropen ungesättigten Polyesterformulierungen erteilt. Ähnliche Gelcoats für die Schiffahrt werden in der US 200710001343 offenbart.

Im Vergleich zu typischer Fällungskieselsäure ist pyrogen hergestellte Kieselsäure effizienter bei der Steigerung der Viskosität und thixotroper, stellt eine bessere Suspensionsstabilität in niederviskosen Harzen bereit und führt zu besserer Klarheit. Zu den Vorteilen von Fällungskieselsäure im Vergleich zu pyrogen hergestellter Kieselsäure gehören u.a. schnellere und scherunabhängige Dispergierung, niedrigere Kosten, besserer Verlauf der Beschichtung oder des Gusses, geringere Porosität in Gelcoats und in einigen Fällen weniger Viskositätsdrift. Infolgedessen wird in zahlreichen Fällen eine Mischung von pyrogen hergestellter Kieselsäure und Fällungskieselsäure verwendet, um die Vorteile beider Kieselsäuretypen zu erhalten. Dies ist jedoch für Hersteller von ungesättigten Polyestern häufig unannehmbar, da die beiden verschiedenen Kieselsäurearten käuflich erworben und gelagert werden müssen, was zwei verschiedene Lagervorrichtungen erforderlich macht. Überdies ist es immer noch notwendig, zumindest zum Teil pyrogen hergestellte Kieselsäure zu verwenden, die viel teurer ist als Fällungskieselsäure.

Aus EP 1561727 sind Fällungskieselsäuren mit hohem pH-Wert und $d_{50}$-Wert für Anwendungen als Entschäumer mit optimierter Silanolgruppendichte bekannt. Ferner sind aus DE 102005005046 Fällungskieselsäuren bekannt

mit einer Silanolgruppendichte von kleiner als 2.5 $SiOH/nm^2$ und einem pH-Wert von 3 - 7.

Zusammenfassend kann daher festgestellt werden, daß ein großer Bedarf an neuen Füllstoffen für flüssige Systeme, vorzugsweise unpolare und mäßig polare Systeme, besonders bevorzugt UPE-Formulierungen, besteht, die zur Verringerung der Kosten, Verbesserung der anwendungstechnischen Eigenschaften und Vereinfachung des Produktionsverfahrens geeignet sind.

KURZE DARSTELLUNG DER ERFINDUNG

Eine der vorliegenden Erfindung zugrundeliegende Aufgabe bestand in der Bereitstellung von neuen Füllstoffen für flüssige Systeme, vorzugsweise unpolare und mäßig polare Systeme, besonders bevorzugt UPE-Formulierungen, aus denen die oben erwähnten Nachteile der Zusammensetzungen des Standes der Technik vollständig oder zumindest teilweise eliminiert sind.

Eine weitere Aufgabe bestand in der Bereitstellung eines Verfahrens zur Herstellung derartiger Füllstoffe. Eine andere Aufgabe bestand in der Bereitstellung neuer flüssiger Zusammensetzungen, vorzugsweise unpolarer und mäßig polarer Systeme, besonders bevorzugt UPE-Formulierungen.

Weitere Aufgaben, die nicht explizit aufgeführt sind, ergeben sich ohne weiteres aus der Beschreibung, den Ansprüchen und den Beispielen der vorliegenden Erfindung.

Im Zuge eigener Arbeiten wurde nun überraschenderweise gefunden, daß diese Aufgaben durch die nachfolgend beschriebene Fällungskieselsäure mit

- einem $d_{50}$-Wert von 150 bis 2000 nm
- einem $d_{90}$-Wert von 500 bis 7000 nm
- einer Silanolgruppendichte von 2,5 bis 8 $OH/nm^2$
- und einer modifizierten Stampfdichte kleiner gleich 70 g/l

gelöst werden können.

Zusätzliche Vorteile und andere Merkmale der vorliegenden Erfindung werden zum Teil in der folgenden Beschreibung dargelegt und ergeben sich zum Teil für den Durchschnittsfachmann beim Studium der folgenden Ausführungen oder können aus der Ausübung der vorliegenden Erfindung gelernt werden. Die Vorteile der vorliegenden Erfindung können realisiert und erhalten werden, wie es insbesondere in den beigefügten Ansprüchen ausgeführt ist. Wie zu erkennen ist, kann die vorliegende Erfindung andere und verschiedene Ausführungsformen annehmen und können ihre Einzelheiten in verschiedener offensichtlicher Hinsicht modifiziert werden, ohne den Schutzbereich der vorliegenden Erfindung zu verlassen. Die Beschreibung ist als erläuternd und nicht als einschränkend zu erachten.

KURZE BESCHREIBUNG DER ZEICHNUNGEN

Figur 1 zeigt eine Fließbettgegenstrahlmühle.
Figur 2 zeigt eine Fließbettgegenstrahlmühle mit integriertem dynamischem Windsichter.
Figur 3 zeigt einen integrierten dynamischen Windsichter.
Figur 4 zeigt eine Fließbettgegenstrahlmühle mit integriertem dynamischem Windsichter.
Figur 5 zeigt einen integrierten dynamischen Windsichter.
Figur 6 zeigt die Bestimmung des Extinktionsverhältnisses $SiOH_{isoliert}$.

NÄHERE BESCHREIBUNG DER ERFINDUNG

Eine erste Ausführungsform der vorliegenden Erfindung ist eine Fällungskieselsäure mit

- einem $d_{50}$-Wert von 150 bis 2000 nm,
- einem $d_{90}$-Wert von 500 bis 7000 nm,
- einer Silanolgruppendichte von 2,5 bis 8 $OH/nm^2$ und
- einer modifizierten Stampfdichte kleiner gleich 70 g/l.

Der $d_{50}$-Wert umfaßt alle Werte und dazwischen liegenden Unterwerte, insbesondere einschließlich 200, 300, 400, 500, 600, 700, 800, 900, 1000, 1100, 1200, 1300, 1400, 1500, 1600, 1700, 1800 und 1900 nm. Der $d_{90}$-Wert umfaßt alle Werte und dazwischen liegenden Unterwerte, insbesondere einschließlich 1000, 1500, 2000, 2500, 3000, 3500, 4000, 4500, 5000, 5500, 6000 und 6500 nm. Die Silanolgruppendichte umfaßt alle Werte und dazwischen liegenden

Unterwerte, insbesondere einschließlich 2,6, 2,7, 2,8, 2,9, 3,0, 3,5, 4, 4,5, 5, 5,5, 6, 6,5, 7 und 7,5 OH/nm$^2$. Die modifizierte Stampfdichte umfaßt alle Werte und dazwischen liegenden Unterwerte, insbesondere einschließlich 0, 0,5, 1, 5, 10, 20, 30, 40, 50 und 60 g/l.

Die vorliegende Erfindung stellt auch Fällungskieselsäure bereit, die neben den oben angegebenen Parametern unabhängig voneinander einen oder mehrere der folgenden physikalisch-chemischen Parameter aufweist:

- eine BET-Oberfläche von 100 bis 350 m$^2$/g,
- einen Trocknungsverlust von 1,5 bis 8 Gew.-%,
- einen Glühverlust von 1,5 bis 9 Gew.-% und
- ein Extinktionsverhältnis $SiOH_{isoliert}$ kleiner gleich 0,8.

Die BET-Oberfläche umfaßt alle Werte und dazwischen liegenden Unterwerte, insbesondere einschließlich 120, 140, 150, 160, 180, 200, 220, 240, 250, 260, 280, 300, 320 und 340 m$^2$/g. Der Trocknungsverlust umfaßt alle Werte und dazwischen liegenden Unterwerte, insbesondere einschließlich 2, 2,5, 3, 3,5, 4, 4,5, 5, 5,5, 6, 6,5, 7 und 7,5 Gew.-%. Der Glühverlust umfaßt alle Werte und dazwischen liegenden Unterwerte, insbesondere einschließlich 2, 2,5, 3, 3,5, 4, 4,5, 5, 5,5, 6, 6,5, 7, 7,5, 8 und 8,5 Gew.-%. Das Extinktionsverhältnis $SiOH_{isoliert}$ umfaßt alle Werte und dazwischen liegenden Unterwerte, insbesondere einschließlich 0, 0,1, 0,2, 0,3, 0,4, 0,5, 0,6, 0,7.

Die vorliegende Erfindung stellt auch Fällungskieselsäure bereit, die neben den oben angegebenen Parametern eine mit mindestens einem zweiwertigen Kation, beispielsweise $Mg^{2+}$, $Ca^{2+}$, $Sr^{2+}$, $Ba^{2+}$ und $Zn^{2+}$, und/oder einem dreiwertigen Kation, beispielsweise $Al^{3+}$, dotierte und/oder gegebenenfalls mit einer Base zur Einstellung des pH-Werts, beispielsweise $NH_3$, NaOH, oder $Ca(OH)_2$, behandelte Oberfläche aufweist. In einer speziellen Ausführungsform kann die Fällungskieselsäure mit einem Mittel, das ein zweiwertiges Kation und eine Base enthält, behandelt sein.

Die vorliegende Erfindung stellt ferner ein Verfahren zur Herstellung von erfindungsgemäßer Fällungskieselsäure bereit, bei dem man eine Fällungskieselsäure mit

- einer Sears-Zahl von 10 bis 30 ml/(5g),
- einer BET-Oberfläche von 100 bis 350 m$^2$/g,
- einem Trocknungsverlust von 2 bis 8 Gew.-%,
- einem Glühverlust von 2 bis 9 Gew.-%,
- einem pH-Wert von 4 bis 9 und
- einem DBP-Wert von 230 bis 400 g/100g, vorzugsweise von 250 bis 350 g/100g,

unter Verwendung eines Mahlsystems (Mahlapparatur), besonders bevorzugt eines Mahlsystems umfassend eine Strahlmühle, vermahlt und gleichzeitig sichtet und welches dadurch gekennzeichnet ist, daß die Mühle des Mahlsystems in der Mahlphase mit einem, Betriebsmittel aus der Gruppe bestehend aus Gas und/oder Dampf, vorzugsweise Wasserdampf, und/oder einem Wasserdampf enthaltenden Gas betrieben wird und daß der Mahlraum in einer Aufheizphase, d. h. vor dem eigentlichen Betrieb mit dem Betriebsmittel, derart aufgeheizt wird, daß die Temperatur im Mahlraum und/oder am Mühlenausgang höher liegt als der Taupunkt des Dampfs und/oder Betriebsmittels, und daß die gemahlene Kieselsäure bis zu einem $d_{50}$-Wert von 150 - 2000 nm und einem $d_{90}$-Wert von 500 - 7000 nm gesichtet wird.

Die Sears-Zahl umfaßt alle Werte und dazwischen liegenden Unterwerte, insbesondere einschließlich 15, 20 und 25 ml/(5g). Die BET-Oberfläche umfaßt alle Werte und dazwischen liegenden Unterwerte, insbesondere einschließlich 120, 140, 150, 160, 180, 200, 220, 240, 250, 260, 280, 300, 320 und 340 m$^2$/g. Der Trocknungsverlust umfaßt alle Werte und dazwischen liegenden Unterwerte, insbesondere einschließlich 2, 2,5, 3, 3,5, 4, 4,5, 5, 5,5, 6, 6,5, 7 und 7,5 Gew.-%. Der Glühverlust umfaßt alle Werte und dazwischen liegenden Unterwerte, insbesondere einschließlich 2, 2,5, 3, 3,5, 4, 4,5, 5, 5,5, 6, 6,5, 7, 7,5, 8 und 8,5 Gew.-%. Der pH-Wert umfaßt alle Werte und dazwischen liegenden Unterwerte, insbesondere einschließlich 4,5, 5, 5,5, 6, 6,5, 7, 7,5, 8 und 8,5.
Der DBP-Wert umfaßt alle Werte und dazwischen liegenden Unterwerte, insbesondere einschließlich 2250, 260, 280, 300, 320, 340, 350, 360, 380g/100g.

Der $d_{50}$-Wert umfaßt alle Werte und dazwischen liegenden Unterwerte, insbesondere einschließlich 200, 300, 400, 500, 600, 700, 800, 900, 1000, 1100, 1200, 1300, 1400, 1500, 1600, 1700, 1800 und 1900 nm. Der $d_{90}$-Wert umfaßt alle Werte und dazwischen liegenden Unterwerte, insbesondere einschließlich 1000, 1500, 2000, 2500, 3000, 3500, 4000, 4500, 5000, 5500, 6000 und 6500 nm.

Die vorliegende Erfindung stellt auch ein Verfahren zum Verdicken von flüssigen Zusammensetzungen, vorzugsweise unpolaren und mäßig polaren Systemen, besonders bevorzugt UPE-Formulierungen, bereit, dadurch gekennzeichnet, daß man mindestens eine erfindungsgemäße Fällungskieselsäure mit mindestens einem Polymer vereinigt.

Die vorliegende Erfindung stellt auch flüssige Systeme, vorzugsweise unpolare Polymerzusammensetzungen, die mindestens eine erfindungsgemäße Fällungskieselsäure enthalten, bereit. Beispiele für die flüssigen Zusammensetzungen sind unpolare Klebstoffe, Plastisole, Epoxidharze, Vinylharze und ganz besonders ungesättigte Polyesterharze.

Die vorliegende Erfindung stellt ferner Produkte/Gegenstände, die mit flüssigen Zusammensetzungen, vorzugsweise unpolaren und mäßig polaren Systemen, besonders bevorzugt UPE-Formulierungen der vorliegenden Erfindung, beschichtet sind, und Verfahren zum Beschichten von Gegenständen mit erfindungsgemäßen UPE-Zusammensetzungen bereit.

Die erfindungsgemäße Fällungskieselsäure zeigt mehrere Vorteile im Vergleich zu Kieselsäure, die im Stand der Technik bekannt ist. Im Vergleich zu herkömmlicherweise in UPE-Formulierungen verwendeter Fällungskieselsäure, wie Sipernat 22 LS von Evonik Degussa GmbH, zeigt die erfindungsgemäße Kieselsäure eine erheblich verbesserte Sedimentationsstabilität und ein erheblich verbessertes Verdickungsverhalten. Ohne Festlegung auf eine bestimmte Theorie wird angenommen, daß die spezielle Kombination einer lockeren Struktur in Kombination mit der hohen Silanolgruppendichte für diese Effekte verantwortlich ist. Es wird angenommen, daß die kleinen Partikel, d.h. der $d_{50}$-Wert und der $d_{90}$-Wert, die Dispersionsstabilität verursachen, während die hohe Silanolgruppendichte zu guten Verdickungseigenschaften und guter Rheologie führt.

Ein anderer Vorteil besteht darin, daß die neuen Kieselsäuren die Erzeugung einer hohen Thixotropie in unpolaren und mäßig polaren flüssigen Formulierungen ohne gleichzeitige zu starke Erhöhung der Viskosität erlauben. Insbesondere wird angenommen, daß die geringe modifizierte Stampfdichte der erfindungsgemäßen Fällungskieselsäuren für eine sehr gute Thixotropie wichtig ist. Hierbei ist zu beachten, daß mit der modifizierten Stampfdichte die Stampfdichte gemessen am unverdichteten Material gemeint ist. Um diese Größe auch an bereits durch Verpackung und Lagerung vorverdichteten Materialien bestimmen zu können, ist eine Probenpräparation, wie sie im Abschnitt "Bestimmung der modifizierten Stampfdichte" beschrieben ist, durchzuführen. Die erfindungsgemäßen Kieselsäuren haben eine geringe modifizierte Stampfdichte, d.h. eine "lockere Struktur".

Ein weiterer Vorteil der erfindungsgemäßen Fällungskieselsäure besteht darin, daß die Polymerzusammensetzungen, die die Kieselsäure enthalten, verbesserte Entlüftungseigenschaften aufweisen.

Durch Dotieren der Oberfläche der Kieselsäure mit mehrwertigen Kationen und/oder $NH_3$ sind außergewöhnliche Viskosität und Thixotropie der UPE-Zusammensetzung erhältlich. Ohne Festlegung auf eine bestimmte Theorie wird angenommen, daß die mehrwertigen Kationen Silanolgruppen und Silanolatgruppen der Fällungskieselsäurepartikel untereinander und mit den Carboxylatgruppen des UPE verbrücken.

Ein anderer wichtiger Vorteil besteht darin, daß die erfindungsgemäßen UPE-Zusammensetzungen eine hervorragende anwendungstechnische Leistungsfähigkeit zeigen, ohne daß eine Mischung von Fällungskieselsäure und pyrogen hergestellter Kieselsäure verwendet werden muß. Mit anderen Worten besteht eines der Schlüsselprobleme, das gelöst worden ist, darin, daß es nun möglich ist, nur einen Füllstoff, d.h. die oben beschriebene Fällungskieselsäure, zu verwenden oder zumindest die Menge an pyrogen hergestellter Kieselsäure erheblich zu verringern und dadurch die Kosten der Formulierung erheblich zu verringern.

Die Begriffe ungesättigte Polyesterzusammensetzung und UPE werden hier synonym verwendet. Analog werden Gelcoat(s), Gelcoatingzusammensetzung(en) und Gelcoatzusammensetzung(en) hier synonym verwendet.

In einer ersten Ausführungsform der Erfindung wird Fällungskieselsäure mit den folgenden physikalisch-chemischen Eigenschaften bereitgestellt:
Wie hier beschriebene Fällungskieselsäure mit

- einem $d_{50}$-Wert von 150 bis 2000 nm, vorzugsweise von 200 bis 1500 nm, besonders bevorzugt von 250 bis 1200 nm, ganz besonders bevorzugt von 300 bis 900 nm und speziell bevorzugt von 350 bis 600 nm;
- einem $d_{90}$-Wert von 500 bis 7000 nm, vorzugsweise von 700 bis 6500 nm, besonders bevorzugt von 800 bis 6000 nm, ganz besonders bevorzugt von 900 bis 6000 nm und speziell bevorzugt von 1000 bis 5000 nm;
- und einer a Silanolgruppendichte von 2,5 bis 8 OH/nm$^2$, vorzugsweise von 2,6 bis 7 OH/nm$^2$, besonders bevorzugt von 2,7 bis 6 OH/nm$^2$, ganz besonders bevorzugt von 2,8 bis 5,5 OH/nm$^2$ und speziell bevorzugt von 3,1 bis 5 nm
- und einer modifizierten Stampfdichte kleiner gleich 70 g/l, vorzugsweise von 1 bis 60 g/l, besonders bevorzugt von 5 bis 55 g/l, ganz besonders bevorzugt von 10 bis 50 g/l und speziell von 10 bis 30 g/l. Die modifizierte Stampfdichte umfaßt alle Werte und dazwischen liegenden Unterwerte, insbesondere einschließlich 5, 10, 15, 20, 25, 30, 35, 40, 45, 50, 55, 60 und 65 g/l.

Zur Erzielung eines guten Verdickungseffekts und einer guten Thixotropie hat es sich als vorteilhaft erwiesen, wenn die erfindungsgemäße Fällungskieselsäure - neben der kleinen Partikelgröße und der geringen modifizierten Stampfdichte - eine BET-Oberfläche von 100 bis 350 m$^2$/g und ein Extinktionsverhältnis $SiOH_{isoliert}$ kleiner gleich 0,8 aufweist.

Ein Parameter, der die Porosität und somit die Verdickungseigenschaften der in dem UPE verwendeten Fällungskieselsäure charakterisiert, ist die BET-Oberfläche. Die BET-Oberfläche der in dem erfindungsgemäßen UPE verwendeten Kieselsäure beträgt vorzugsweise 100 bis 350 m$^2$/g, besonders bevorzugt 110 bis 340 m$^2$/g, ganz beson-

ders bevorzugt 120 bis 330 $m^2/g$, speziell bevorzugt 130 bis 300 $m^2/g$ und ganz speziell bevorzugt 145 bis 280 $m^2/g$.

Auch die chemische Struktur der Kieselsäureoberfläche hat einen Einfluß auf die Verdickungseigenschaften. Es wurde überraschenderweise gefunden, daß der Effekt der hohen Silanolgruppendichte der erfindungsgemäßen Kieselsäure vervielfacht werden kann, wenn weniger isolierte Silanolgruppen an der Kieselsäureoberfläche vorliegen. In einer bevorzugten Ausführungsform der Erfindung zeichnen sich die erfindungsgemäßen Fällungskieselsäuren dadurch aus, daß sie einen besonders geringen Anteil an isolierten SiOH-Gruppen, ausgedrückt durch das Extinktionsverhältnis $SiOH_{isoliert}$, an ihrer Oberfläche aufweisen. Das Extinktionsverhältnis $SiOH_{isoliert}$ der erfindungsgemäßen Kieselsäuren ist kleiner gleich 0,8 und liegt vorzugsweise zwischen 0,01 und 0,75, besonders bevorzugt zwischen 0,01 und 0,7, ganz besonders bevorzugt zwischen 0,01 und 0,65, speziell bevorzugt zwischen 0,01 und 0,6 und ganz speziell bevorzugt zwischen 0,01 und 0,6 $SiOH/nm^2$.

In einer besonders bevorzugten Ausführungsform der vorliegenden Erfindung ist die Oberfläche der Fällungskieselsäure mit einem mehrwertigen Kation dotiert. Zur Einstellung des pH-Werts der Fällungskieselsäure kann eine Base zugegeben werden, die vorzugsweise aus der Gruppe bestehend aus $NH_3$, NaOH und $Ca(OH)_2$ ausgewählt wird. In einer speziellen Ausführungsform kann die erfindungsgemäße Fällungskieselsäure mit einem Mittel, das mindestens ein zweiwertiges Kation und mindestens eine Base enthält, behandelt sein.

Das mehrwertige, vorzugsweise zweiwertige und/oder dreiwertige Kation wird aus der Erdalkalimetallgruppe oder der Übergangsmetallgruppe ausgewählt, vorzugsweise aus der Gruppe bestehend aus $Mg^{2+}$, $Ca^{2+}$, $Zn^{2+}$ und $Al^{3+}$. Die Dotierung der Kieselsäureoberfläche mit mehrwertigen Kationen hat den technischen Vorteil, daß der Verdickungseffekt der Kieselsäure in dem ungesättigten Polyesterharz erhöht wird.

Die erfindungsgemäße Kieselsäure kann durch Vermahlen und Sichten einer Fällungskieselsäure mit

- einer Sears-Zahl von 10 bis 30 ml/(5g), vorzugsweise 10 bis 25 ml/(5g),
- einer BET-Oberfläche von 100 bis 350 $m^2/g$, vorzugsweise 130 bis 300 $m^2/g$,
- einem Trocknungsverlust von 2 bis 8 Gew.-%, vorzugsweise 2 bis 7 Gew.-%, besonders bevorzugt 2,5 bis 6 Gew.-%,
- einem Glühverlust von 2 bis 9 Gew.-%, vorzugsweise 2 bis 7 Gew.-%, besonders bevorzugt 2,5 bis 5 Gew.-%,
- einem pH-Wert von 4 bis 9, vorzugsweise 4 bis 8, besonders bevorzugt 5 bis 8 und
- einem DBP-Wert von 230 g bis 400 g/100g, vorzugsweise 250 bis 350 g/100g

mit einem Mahlsystem (Mahlapparatur), besonders bevorzugt einem Mahlsystem mit einer Strahlmühle, hergestellt werden, welches dadurch gekennzeichnet, daß die Mühle des Mahlsystems in der Mahlphase mit einem Betriebsmittel aus der Gruppe bestehend aus Gas und/oder Dampf, vorzugsweise Wasserdampf, und/oder einem Wasserdampf enthaltenden Gas betrieben wird und daß der Mahlraum in einer Aufheizphase, d. h. vor dem eigentlichen Betrieb mit dem Betriebsmittel, derart aufgeheizt wird, daß die Temperatur im Mahlraum und/oder am Mühlenausgang höher liegt als der Taupunkt des Dampfs und/oder Betriebsmittels, und daß die gemahlene Kieselsäure bis zu einem $d_{50}$-Wert von 150 - 2000 nm und einem $d_{90}$-wert von 500 - 7000 nm gesichtet wird.

Als Ausgangsstoffe geeignete im Handel erhältliche Kieselsäuren sind Sipernat 160, Sipernat 22, Sipernat 22 S, Sipernat 22 LS von Evonik Degussa GmbH, Deutschland, und eine Kieselsäure mit der Bezeichnung YH 350 von DWS, Degussa Wellink Silica, Nanping, China.

Die Wahl einer entsprechenden Ausgangskieselsäure beeinflußt die Vermahlung und somit die Thixotropie- und Viskositätseigenschaften der erhaltenen Kieselsäure.

Besonders bevorzugt erfolgt die Vermahlung nach dem in der DE-10 2006-048-850-4 beschriebenen Verfahren mit dem darin beschriebenen Mahlsystem (Mühle), wobei speziell bevorzugt Wasserdampf als Betriebsmittel verwendet wird. Verfahren zur Vermahlung sind in den deutschen Patentanmeldungen DE-102006024591, eingereicht am 26. Mai 2006, DE-102007004757, eingereicht am 31. Januar 2007, und DE 1020060488504, eingereicht am 16. Oktober 2006, beschrieben.

In Figur 1 sind die Bezugszahlen wie folgt: Stahlmühle (1), zylindrisches Gehäuse (2), Mahlkammer (3), Mahlgutaufgabe (4), Mahlstrahleneinlaß (5), Heizöffnungen oder Heizdüse (5a), Produktauslaß (6), Windsichter (7), Sichtrad (8), Einlaßöffnung oder Einlaßdüse (9), Mahlstrahl (10), Heizquelle (11), Heizquelle (12), Zuführungsrohr (13), temperaturisolierender Mantel (14), Einlaß (15), Auslaß (16), Zentrum der Mahlkammer (17), Reservoir- oder Erzeugungseinrichtung (18), Tank (18a) und Leitungseinrichtungen (19).

In Figur 2 sind die Bezugszahlen wie folgt: Strahlmühle (1), Windsichter (7), Sichterspalt (8a), Austrittsstutzen (Tauchrohr) (20), Sichtergehäuse (21), Gehäuseoberteil (22), Gehäuseunterteil (23), Umfangsflansch (24), Umfangsflansch (25), Gelenk (26), Pfeil (27), Sichtraumgehäuse (28), Tragarme (28a), Austragkonus (29), Flansch (30), Flansch (31), Deckscheibe (32), Deckscheibe (33), Schaufel (34), Sichtradwelle (35), Drehlager (35a), Wellendurchführung (35b), obere bearbeitete Platten (36), untere bearbeitete Platte (37), Gehäuseendabschnitt (38), Produktaufgabestutzen (39), Drehachse (40), Austrittskammer (41), obere Deckplatte (42), abnehmbarer Deckel (43), Tragarme (44), kegelförmiges Ringgehäuse (45), Ansaugfilter (46), Lochplatte (47), Feingutaustragrohr (48), Abweiskegel (49), Sichtlufteintrittsspirale (50), Grobgutaustrag (51), Flansch (52), Flansch (53), Dispersionszone (54), an der Innenkante bearbeiteter (angefaster)

Flansch und Auskleidung (55), auswechselbares Schutzrohr (56), auswechselbares Schutzrohr (57), Feingutaustritt/-auslaß (58).

In Figur 3 sind die Bezugszahlen wie folgt: Sichterspalt (8a), Austrittsstutzen (Tauchrohr) (20), Deckscheibe (32), Deckscheibe (33), Schaufel (34), Wellendurchführung (35b), Drehachse (40), Schaufelkranz (59).

In Figur 4 sind die Bezugszahlen wie folgt: Strahlmühle (1), Luftsichter (7), Austrittsstutzen (Tauchrohr) (20), Sichtergehäuse (21), Gehäuseoberteil (22), Gehäuseunterteil (23), Umfangsflansch (24), Umfangsflansch (25), Gelenk (26), Pfeil (27), Sichtraumgehäuse (28), Tragarme (28a), Austragkonus (29), Flansch (30), Flansch (31), Deckscheibe (32), Deckscheibe (33), Schaufel (34), Sichtradwelle (35), Drehlager (35a), obere bearbeitete Platten (36), untere bearbeitete Platte (37), Gehäuseendabschnitt (38), Produktaufgabestutzen (39), Drehachse (40), Austrittskammer (41), obere Deckplatte (42), abnehmbarer Deckel (43), Tragarme (44), kegelförmiges Ringgehäuse (45), Ansaugfilter (46), Lochplatte (47), Feingutaustragrohr (48), Abweiskegel (49), Sichtlufteintrittsspirale (50), Grobgutaustrag (51), Flansch (52), Flansch (53), Dispersionszone (54), an der Innenkante bearbeiteter (angefaster) Flansch und Auskleidung (55), auswechselbares Schutzrohr (56), auswechselbares Schutzrohr (57), Feingutaustritt/-auslaß (58).

In Figur 5 sind die Bezugszahlen wie folgt: Austrittsstutzen (Tauchrohr) (20), Deckscheibe (32), Deckscheibe (33), Schaufel (34), Drehachse (40), Schaufelkranz (59).

In einer speziell bevorzugten Ausführungsform wird zur Vorbereitung der eigentlichen Vermahlung mit überhitztem Wasserdampf eine Fließbettgegenstrahlmühle gemäß Figur 1 mit einem integrierten dynamischen Windsichter gemäß den Figuren 2 und 3 zunächst über die zwei Heizöffnungen oder Heizdüsen 5a (wovon in Figur 1 nur eine dargestellt ist), welche mit heißer Druckluft, vorzugsweise bei 10 bar und 160°C, beaufschlagt werden, aufgeheizt, bis die Mühlenaustrittstemperatur höher liegt als der Taupunkt des Wasserdampfs und/oder Betriebsmittels, vorzugsweise etwa 105°C.

Der Mühle ist zur Abscheidung des Mahlgutes eine Filteranlage nachgeschaltet (nicht in Fig. 1 gezeigt), deren Filtergehäuse im unteren Drittel indirekt über angebrachte Heizschlangen mittels gesättigtem Wasserdampf (vorzugsweise 6 bar gesättigtem Wasserdampf) ebenfalls zur Verhinderung von Kondensation beheizt wird. Alle Apparateoberflächen im Bereich der Mühle, des Abscheidefilters, sowie der Versorgungsleitungen für Wasserdampf und heiße Druckluft sind besonders isoliert.

Nach Erreichen der gewünschten Aufheiztemperatur wird die Versorgung der Heizdüsen mit heißer Druckluft abgeschaltet und die Beaufschlagung der drei Mahldüsen mit überhitztem Wasserdampf, vorzugsweise bei 38 bar (abs) und 325°C, gestartet.

Zum Schutz des im Abscheidefilter eingesetzten Filtermittels sowie zur Einstellung eines bestimmten Restwassergehalts des Mahlguts von vorzugsweise 2 bis 6%, wird Wasser in der Startphase und während der Vermahlung in den Mahlraum der Mühle über eine mit Druckluft betriebene Zweistoffdüse in Abhängigkeit von der Mühlenaustrittstemperatur eingedüst.

Die Regelung der Aufgabemenge erfolgt in Abhängigkeit vom Sichtermotorstrom. Der Strom regelt die Aufgabemenge derart, daß ungefähr 70% des Nennstroms nicht überschritten werden können.

Als Eintragsorgan (4) fungiert dabei ein drehzahlgeregeltes Zellenrad, welches das Aufgabegut aus einem Vorlagebehälter über eine als barometrischer Abschluß dienende Taktschleuse in die unter Überdruck stehende Mahlkammer dosiert.

Die Zerkleinerung des Grobguts erfolgt in den expandierenden Wasserdampfstrahlen (Mahlgas). Gemeinsam mit dem entspannten Mahlgas steigen die Produktpartikel im Zentrum des Mühlenbehälters zum Sichtrad auf. Je nach eingestellter Sichterdrehzahl und Mahldampfmenge gelangen die Partikel, die eine ausreichende Feinheit aufweisen, mit dem Mahldampf in den Feingutaustritt und von dort in das nachgeschaltete Abscheidesystem, während zu grobe Partikel zurück in die Mahlzone gelangen und einer nochmaligen Zerkleinerung unterworfen werden. Der Austrag des abgeschiedenen Feingutes aus dem Abscheidefilter in die nachfolgende Silierung und Abpackung geschieht mittels Zellenradschleuse.

Der an den Mahldüsen herrschende Mahldruck des Mahlgases und das daraus resultierende Mahlgasvolumen in Verbindung mit der Drehzahl des dynamischen Schaufelradsichters bestimmen die Feinheit der Kornverteilungsfunktion sowie die Oberkorngrenze.

In einer bevorzugten Ausführungsform wird die Vermahlung folgendermaßen durchgeführt.

Das erfindungsgemäße Verfahren wird in einem Mahlsystem (Mahlapparatur), vorzugsweise in einem Mahlsystem mit einer Strahlmühle, besonders bevorzugt mit einer Gegenstrahlmühle, durchgeführt. Dazu wird ein zu zerkleinerndes Aufgabegut in expandierenden Gasstrahlen hoher Geschwindigkeit beschleunigt und durch Partikel-Partikel-Stöße zerkleinert. Als Strahlmühlen werden ganz besonders bevorzugt Fließbettgegenstrahlmühlen oder Dichtbettstrahlmühlen oder Spiralstrahlmühlen verwendet. Im Fall der ganz besonders bevorzugten Fließbettgegenstrahlmühle befinden sich im unteren Drittel der Mahlkammer zwei oder mehr Mahlstrahleinlässe, vorzugsweise in Form von Mahldüsen, welche sich vorzugsweise in einer horizontalen Ebene befinden. Die Mahlstrahleinlässe sind besonders bevorzugt so am Umfang des vorzugsweise runden Mahlbehälters angeordnet, daß sich die Mahlstrahlen alle an einem Punkt im Inneren des Mahlbehälters treffen. Insbesondere bevorzugt sind die Mahlstrahleinlässe gleichmäßig über den Umfang

des Mahlbehälters verteilt. Im Fall von drei Mahlstrahleinlässen würde der Abstand somit jeweils 120° betragen.

In einer speziellen Ausführungsform des erfindungsgemäßen Verfahrens umfaßt das Mahlsystem (Mahlapparatur) einen Sichter, vorzugsweise einen dynamischen Sichter, besonders bevorzugt einen dynamischen Schaufelradsichter, speziell bevorzugt einen Sichter gemäß den Figuren 4 und 5.

In einer besonders bevorzugten Ausführungsform wird ein dynamischer Windsichter gemäß den Figuren 2 und 3 verwendet. Dieser dynamische Windsichter enthält ein Sichtrad und eine Sichtradwelle sowie ein Sichtergehäuse, wobei zwischen dem Sichtrad und dem Sichtergehäuse ein Sichterspalt und zwischen der Sichtradwelle und dem Sichtergehäuse eine Wellendurchführung gebildet ist, und ist dadurch gekennzeichnet, daß eine Spaltspülung von Sichterspalt und/oder Wellendurchführung mit komprimierten Gasen niedriger Energie erfolgt.

Durch die Verwendung eines Sichters in Kombination mit der unter den erfindungsgemäßen Bedingungen betriebenen Strahlmühle erfolgt eine Begrenzung des Oberkorns, wobei die gemeinsam mit den entspannten Gasstrahlen aufsteigenden Produktpartikel aus dem Zentrum des Mahlbehälters durch den Sichter geleitet werden und anschließend das Produkt, das eine ausreichende Feinheit aufweist, aus dem Sichter und aus der Mühle ausgeführt wird. Zu grobe Partikel gelangen zurück in die Mahlzone und werden einer weiteren Zerkleinerung unterworfen.

Im Mahlsystem kann ein Sichter als separate Einheit der Mühle nachgeschaltet werden, vorzugsweise wird jedoch ein integrierter Sichter verwendet.

Dieses besonders bevorzugte erfindungsgemäße Mahlverfahren umfaßt eine dem eigentlichen Mahlschritt vorgeschaltete Aufheizphase, in der sichergestellt wird, daß der Mahlraum, besonders bevorzugt alle wesentlichen Bauteile der Mühle und/oder des Mahlsystems, an denen Wasser und/oder Wasserdampf kondensieren könnten, derart aufgeheizt wird/werden, daß dessen/deren Temperatur oberhalb des Taupunktes des Wasserdampfs liegt. Das Aufheizen kann im Prinzip durch jede Heizmethode erfolgen. Bevorzugt erfolgt die Aufheizung jedoch dadurch, daß heißes Gas durch die Mühle und/oder das ganze Mahlsystem geleitet wird, so daß die Temperatur des Gases am Mühlenausgang höher ist als der Taupunkt des Dampfs. Dabei wird besonders bevorzugt darauf geachtet, daß das heiße Gas vorzugsweise alle wesentlichen Bauteile der Mühle und/oder des ganzen Mahlsystems, die mit dem Wasserdampf in Verbindung kommen, hinreichend aufheizt.

Als Heizgas kann man prinzipiell jedes beliebige Gas und/oder Gasgemische verwenden, vorzugsweise werden jedoch heiße Luft und/oder Verbrennungsgase und/oder Inertgase verwendet. Die Temperatur des heißen Gases liegt über dem Taupunkt des Wasserdampfs.

Das heiße Gas kann prinzipiell an jedem gewünschten Punkt in den Mahlraum eingeführt werden. Vorzugsweise befinden sich dafür im Mahlraum Einlässe bzw. Düsen. Bei diesen Einlässen bzw. Düsen kann es sich um dieselben Einlässe bzw. Düsen handeln, durch die während der Mahlphase auch die Mahlstrahlen geleitet werden (Mahldüsen). Es ist aber auch möglich, daß im Mahlraum separate Einlässe bzw. Düsen (Heizdüsen) vorhanden sind, durch die das heiße Gas und/oder Gasgemisch in den Mahlraum eingeleitet werden kann. In einer bevorzugten Ausführungsform wird das Heizgas bzw. Heizgasgemisch durch zumindest zwei, vorzugsweise drei oder mehr, in einer Ebene angeordnete Einlässe und Düsen eingeführt, welche so am Umfang des bevorzugt runden Mahlbehälters angeordnet sind, daß sich die Strahlen alle an einem Punkt im Inneren des Mahlbehälters treffen. Insbesondere bevorzugt sind die Einlässe bzw. Düsen gleichmäßig über den Umfang des Mahlbehälters verteilt.

Während der Vermahlung wird durch die Mahlstrahleinlässe, vorzugsweise in Form von Mahldüsen, als Betriebsmittel ein Gas und/oder ein Dampf, vorzugsweise Wasserdampf und/oder- ein Gas/WasserdampfGemisch, entspannt. Dieses Betriebsmittel weist in der Regel eine wesentlich höhere Schallgeschwindigkeit als Luft (343 m/s), vorzugsweise mindestens 450 m/s, auf. Vorteilhafterweise umfaßt das Betriebsmittel Wasserdampf und/oder Wasserstoffgas und/oder Argon und/oder Helium. Besonders bevorzugt handelt es sich um überhitzten Wasserdampf. Um eine sehr feine Vermahlung zu erreichen, hat es sich als besonders vorteilhaft erwiesen, daß das Betriebsmittel mit einem Druck von 15 bis 250 bar, besonders bevorzugt von 20 bis 150 bar, ganz besonders bevorzugt 30 bis 70 bar und insbesondere bevorzugt 40 bis 65 bar in die Mühle entspannt wird. Ebenfalls besonders bevorzugt weist das Betriebsmittel eine Temperatur von 200 bis 800°C, besonders bevorzugt 250 bis 600°C und insbesondere 300 bis 400°C auf. Der Druck umfaßt alle Werte und dazwischen liegenden Unterwerte, insbesondere einschließlich 20, 40, 60, 80, 100, 120, 140, 160, 180, 200, 220 und 240 bar. Die Temperatur des Betriebsmediums umfaßt alle Werte und dazwischen liegenden Unterwerte, insbesondere einschließlich 250, 300, 350, 400, 450, 500, 550, 600, 650, 700, 750°C.

Im Fall von Wasserdampf als Betriebsmittel, also insbesondere dann, wenn die Dampfzufuhrleitung an eine Wasserdampfquelle angeschlossen ist, erweist es sich als besonders vorteilhaft, wenn die Mahl- oder Einlaßdüsen an eine Dampfzufuhrleitung angeschlossen sind, die mit Dehnungsbögen ausgestattet ist.

Weiterhin hat es sich als vorteilhaft erwiesen, wenn die Oberfläche der Strahlmühle einen möglichst kleinen Wert aufweist und/oder die Strömungswege zumindest weitgehend vorsprungsfrei sind und/oder wenn die Komponenten der Strahlmühle zur Vermeidung von Massenanhäufungen ausgelegt sind. Durch diese Maßnahmen kann eine Ablagerung des Mahlguts in der Mühle zusätzlich verhindert werden.

Anhand der nachfolgend beschriebenen bevorzugten und speziellen Ausführungsformen des erfindungsgemäßen Verfahrens sowie der bevorzugten und besonders geeigneten Ausführungen von Strahlmühlen sowie der Zeichnungen und Beschreibungen der Zeichnungen wird die Erfindung lediglich exemplarisch näher erläutert, d. h. sie ist nicht auf diese Ausführungs- und Anwendungsbeispiele oder auf die jeweiligen Merkmalskombinationen innerhalb einzelner Ausführungsbeispiele beschränkt.

Einzelne Merkmale, die im Zusammenhang mit konkreten Ausführungsbeispielen angegeben und/oder dargestellt sind, sind nicht auf diese Ausführungsbeispiele oder die Kombination mit den übrigen Merkmalen dieser Ausführungsbeispiele beschränkt, sondern können im Rahmen der technischen Möglichkeiten, mit jeglichen anderen Varianten, auch wenn sie in den vorliegenden Unterlagen nicht gesondert behandelt sind, kombiniert werden.

Gleiche Bezugszahlen in den einzelnen Figuren und Abbildungen der Zeichnungen bezeichnen gleiche oder ähnliche oder gleich oder ähnlich wirkende Komponenten. Anhand der Diagramme in der Zeichnung werden auch solche Merkmale deutlich, die nicht mit Bezugszahlen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Wie oben bereits angedeutet, kann im erfindungsgemäßen Verfahren eine Strahlmühle, vorzugsweise eine Gegenstrahlmühle, mit integriertem Sichter, vorzugsweise einem integrierten dynamischen Windsichter, zur Erzeugung feinster Partikel verwendet werden. Besonders bevorzugt enthält der Windsichter ein Sichtrad und eine Sichtradwelle sowie ein Sichtergehäuse, wobei zwischen dem Sichtrad und dem Sichtergehäuse ein Sichterspalt und zwischen der Sichtradwelle und dem Sichtergehäuse eine Wellendurchführung gebildet ist, und wird derart betrieben, daß eine Spaltspühlung von Sichterspalt und/oder Wellendurchführung mit komprimierten Gasen niedriger Energie erfolgt.

Vorzugsweise wird dabei das Spühlgas mit einem Druck von nicht mehr als mindestens ungefähr 0,4 bar, besonders bevorzugt nicht mehr als mindestens etwa 0,3 bar und insbesondere nicht mehr als etwa 0,2 bar über dem Mühleninnendruck eingesetzt. Dabei kann der Mühleninnendruck mindestens etwa im Bereich von 0,1 bis 0,5 bar liegen.

Ferner ist es bevorzugt, wenn das Spühlgas mit einer Temperatur von etwa 80 bis etwa 120°C, insbesondere ungefähr 100°C, eingesetzt wird, und/oder wenn als Spühlgas niederenergetische Druckluft, insbesondere mit etwa 0,3 bar bis etwa 0,4 bar, verwendet wird.

Die Drehzahl eines Sichtrotors des Windsichters und das innere Verstärkungsverhältnis können so gewählt oder eingestellt werden oder regelbar sein, daß die Umfangsgeschwindigkeit des Betriebsmittels (B) an einem dem Sichtrad zugeordneten Tauchrohr oder Austrittsstutzen bis zum 0,8-fachen der Schallgeschwindigkeit des Betriebsmediums erreicht.

Dies kann dadurch weitergebildet sein, daß die Drehzahl eines Sichtrotors des Windsichters und das innere Verstärkungsverhältnis so gewählt oder eingestellt oder regelbar sind, daß die Umfangsgeschwindigkeit des Betriebsmittels (B) an dem Tauchrohr oder Austrittsstutzen bis zum 0,7-fachen und besonders bevorzugt bis zum 0,6-fachen der Schallgeschwindigkeit des Betriebsmediums erreicht.

Insbesondere kann ferner mit Vorteil vorgesehen sein, daß der Sichtrotor eine mit abnehmendem Radius zunehmende lichte Höhe aufweist, wobei vorzugsweise die durchströmte Fläche des Sichtrotors mindestens ungefähr konstant ist. Alternativ oder zusätzlich kann es vorteilhaft sein, wenn der Sichtrotor ein auswechselbares, mitrotierendes Tauchrohr aufweist. Bei noch einer weiteren Variante ist es bevorzugt, eine Feingutaustrittskammer vorzusehen, die in Strömungsrichtung eine Querschnittserweiterung aufweist.

Weiterhin kann die erfindungsgemäße Strahlmühle mit Vorteil insbesondere einen Windsichter enthalten, der einzelne Merkmale oder Merkmalskombinationen des Windsichters gemäß der EP 0 472 930 B1 enthält. Durch diese Bezugnahme ist zur Vermeidung bloßer identischer Übernahme der gesamte Offenbarungsgehalt der EP 0 472 930 B1 vollumfänglich hierin aufgenommen. Insbesondere kann der Windsichter Mittel zum Abbau der Umfangskomponenten der Strömung gemäß der EP 0 472 930 B1 enthalten. Dabei kann insbesondere vorgesehen sein, daß ein dem Sichtrad des Windsichters zugeordneter Austrittsstutzen, der als Tauchrohr ausgebildet ist, in Strömungsrichtung eine vorzugsweise zur Vermeidung von Wirbelbildungen gerundet gestaltete Querschnittserweiterung aufweist.

Bevorzugte und/oder vorteilhafte Ausführungsformen des im erfindungsgemäßen Verfahren verwendbaren Mahlsystems bzw. der Mühle ergeben sich aus den Figuren 1 bis 5 sowie der zugehörigen Beschreibung, wobei noch einmal betont sei, daß diese Ausführungsformen die Erfindung lediglich exemplarisch näher erläutern, d. h. die Erfindung ist nicht auf diese Ausführungs- und Anwendungsbeispiele oder auf die jeweiligen Merkmalskombinationen innerhalb einzelner Ausführungsbeispiele beschränkt.

Einzelne Merkmale, die im Zusammenhang mit konkreten Ausführungsbeispielen angegeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnungen bezeichnen gleiche oder ähnliche oder gleich und ähnlich wirkende Komponenten. Anhand der Diagramme in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

In der Figur 1 ist ein Ausführungsbeispiel einer Strahlmühle 1 mit einem zylindrischen Gehäuse 2, das eine Mahlkammer 3 umschließt, einer Mahlgutaufgabe 4 etwa in der halben Höhe der Mahlkammer 3, mindestens einem Mahlstrahleinlaß 5 im unteren Bereich der Mahlkammer 3 und einem Produktauslaß 6 im oberen Bereich der Mahlkammer 3 gezeigt. Dort ist ein Windsichter 7 mit einem drehbaren Sichtrad 8 angeordnet, mit dem das Mahlgut (nicht gezeigt) klassiert wird, um nur Mahlgut unterhalb einer bestimmten Korngröße durch den Produktauslaß 6 aus der Mahlkammer 3 abzuführen und Mahlgut mit einer Korngröße über dem ausgewählten Wert einem weiteren Mahlvorgang zuzuführen.

Das Sichtrad 8 kann ein bei Windsichtern übliches Sichtrad sein, dessen Schaufeln (siehe später, beispielsweise im Zusammenhang mit Figur 5) radial verlaufende Schaufelkanäle begrenzen, an deren äußeren Enden die Sichtluft eintritt und Partikel kleinerer Korngröße oder Masse zum zentralen Auslaß und zum Produktauslaß 6 mitschleppt, während größere Partikel oder Partikel größerer Masse unter dem Einfluß der Fliehkraft abgewiesen werden. Besonders bevorzugt sind der Windsichter 7 und/oder zumindest dessen Sichtrad 8 mit wenigstens einem Gestaltungsmerkmal gemäß der EP 0 472 930 B1 ausgestattet.

Es kann nur ein Mahlstrahleinlaß 5, beispielsweise bestehend aus einer einzigen, radial gerichteten Einlaßöffnung oder Einlaßdüse 9 vorgesehen sein, um einen einzigen Mahlstrahl 10 auf die Mahlgutpartikel, die von der Mahlgutaufgabe 4 aus in den Bereich des Mahlstrahles 10 gelangen, mit hoher Energie auftreffen und die Mahlgutpartikel in kleinere Teilpartikel zerlegen zu lassen, die vom Sichtrad 8 angesaugt und, soweit sie eine entsprechend geringe Größe bzw. Masse haben, durch den Produktauslaß 6 nach außen gefördert werden. Eine bessere Wirkung wird jedoch mit paarweise diametral einander gegenüberliegenden Mahlstrahleinlässen 5 erzielt, die zwei aufeinander prallende Mahlstrahlen 10 bilden, die die Partikelzerlegung intensiver bewirken als dies mit nur einem Mahlstrahl 10 möglich ist, insbesondere wenn mehrere Mahlstrahlpaare erzeugt werden.

Vorzugsweise werden zwei oder mehr Mahlstrahleinlässe, bevorzugt Mahldüsen, insbesondere 3, 4, 5, 6, 7, 8, 9, 10, 11 oder 12 Mahlstrahleinlässe verwendet, die im unteren Drittel des vorzugsweise zylinderförmigen Gehäuses der Mahlkammer angebracht sind. Diese Mahlstrahleinlässe sind idealerweise in einer Ebene und gleichmäßig über den Umfang des Mahlbehälters verteilt angeordnet, so daß sich die Mahlstrahlen alle an einem Punkt im Inneren des Mahlbehälters treffen. Insbesondere bevorzugt sind die Einlässe bzw. Düsen gleichmäßig über den Umfang des Mahlbehälters verteilt. Bei drei Mahlstrahlen wäre das ein Winkel von 120° zwischen den jeweiligen Einlässen bzw. Düsen. Allgemein kann man sagen, daß je größer der Mahlraum ist, umso mehr Einlässe bzw. Mahldüsen verwendet werden.

Der Mahlraum kann in einer bevorzugten Ausführungsform des erfindungsgemäßen Verfahrens zusätzlich zu den Mahlstrahleinlässen Heizöffnungen oder Heizdüsen 5a, vorzugsweise in Form von Heizdüsen, enthalten, durch die heißes Gas in der Aufheizphase in die Mühle geleitet werden kann. Diese Düsen bzw. Öffnungen können - wie zuvor bereits geschildert in derselben Ebene angeordnet sein wie die Mahlöffnungen bzw. -düsen 5. Es können eine, vorzugsweise aber auch mehrere, besonders bevorzugt 2, 3, 4, 5, 6, 7 oder 8, Heizöffnungen bzw. -düsen 5a enthalten sein.

In einer ganz besonders bevorzugten Ausführungsform enthält die Mühle zwei Heizdüsen bzw. -öffnungen und drei Mahldüsen bzw. -öffnungen.

Ferner kann beispielsweise die Verarbeitungstemperatur beeinflußt werden durch Einsatz einer internen Heizquelle 11 zwischen Mahlgutaufgabe 4 und dem Bereich der Mahlstrahlen 10 oder einer entsprechenden Heizquelle 12 im Bereich außerhalb der Mahlgutaufgabe 4 oder durch Verarbeitung von Partikeln eines ohnehin schon warmen Mahlguts, das unter Vermeidung von Wärmeverlusten in die Mahlgutaufgabe 4 gelangt, wozu ein Zuführungsrohr 13 von einem temperaturisolierenden Mantel 14 umgeben ist. Die Heizquelle 11 oder 12 kann, wenn sie eingesetzt wird, dem Grund nach beliebig sein und daher zweckgerichtet einsatzfähig und gemäß der Verfügbarkeit am Markt ausgewählt werden, so daß weitere Erläuterungen dazu nicht erforderlich sind.

Für die Temperatur ist insbesondere die Temperatur des Mahlstrahls oder der Mahlstrahlen 10 relevant, und die Temperatur des Mahlgutes sollte dieser Mahlstrahltemperatur zumindest ungefähr entsprechen.

Zur Bildung der durch Mahlstrahleinlässe 5 in die Mahlkammer 3 eingebrachten Mahlstrahlen 10 wird dazu beim vorliegenden Ausführungsbeispiel überhitzter Wasserdampf verwendet. Dabei ist davon auszugehen, daß der Wärmeinhalt des Wasserdampfs nach der Einlaßdüse 9 des jeweiligen Mahlstrahleinlasses 5 nicht wesentlich geringer ist als vor dieser Einlaßdüse 9. Weil die für die Prallzerkleinerung notwendige Energie primär als Strömungsenergie zur Verfügung stehen soll, wird demgegenüber der Druckabfall zwischen dem Einlaß 15 der Einlaßdüse 9 und deren Auslaß 16 erheblich sein (die Druckenergie wird weitestgehend in Strömungsenergie umgesetzt sein), und auch der Temperaturabfall wird nicht unerheblich sein. Insbesondere dieser Temperaturabfall soll durch die Erwärmung des Mahlguts so weit kompensiert sein, daß Mahlgut und Mahlstrahl 10 im Bereich des Zentrums 17 der Mahlkammer 3 bei zumindest zwei aufeinandertreffenden Mahlstrahlen 10 oder einem Vielfachen von zwei Mahlstrahlen 10 die gleiche Temperatur haben.

Die Gestaltung und Durchführung der Aufbereitung des Mahlstrahls 10 aus überhitztem Wasserdampf, insbesondere in Form eines geschlossenen Systems, wird in der DE 198 24 062 A1 beschrieben Durch ein geschlossenes System ist beispielsweise eine Mahlung von heißer Schlacke als Mahlgut mit optimalem Wirkungsgrad möglich.

In Figur 1 der Strahlmühle 1 ist stellvertretend für jegliche Zufuhr eines Betriebsmittels B eine Reservoir- oder Erzeugungseinrichtung 18, die beispielsweise einen Tank 18a darstellt, woraus das Betriebsmittel B über Leitungseinrichtungen 19 zu dem Mahlstrahleinlaß 5 oder den Mahlstrahleinlässen 5 zur Bildung des Mahlstrahls 10 bzw. der Mahlstrahlen 10 geleitet wird.

Insbesondere ausgehend von einer mit einem Windsichter 7 ausgestatteten Strahlmühle 1, wobei die diesbezüglichen Ausführungsbeispiele hierin nur als exemplarisch und nicht als beschränkend beabsichtigt und zu verstehen sind, wird mit dieser Strahlmühle 1 mit einem integrierten dynamischen Windsichter 7 ein Verfahren zur Erzeugung feinster Partikel durchgeführt. Die Neuerung gegenüber herkömmlichen Strahlmühlen besteht neben der Tatsache, daß der Mahlphase eine Aufheizphase vorgeschaltet ist, in der alle mit dem Dampf in Berührung kommenden Teile auf eine Temperatur oberhalb des Taupunkts des Dampfs aufgeheizt werden, und der Tatsache, daß vorzugsweise ein integrierter Sichter verwendet wird, darin, daß die Drehzahl des Sichtrotors oder Sichtrads 8 des Windsichters 7 und das innere Verstärkungsverhältnis vorzugsweise so gewählt, eingestellt oder geregelt werden, daß die Umfangsgeschwindigkeit eines Betriebsmittels B an einem dem Sichtrad 8 zugeordneten Tauchrohr oder Austrittsstutzen 20 bis zum 0,8-fachen, vorzugsweise bis zum 0,7-fachen und besonders bevorzugt bis zum 0,6-fachen der Schallgeschwindigkeit des Betriebsmittels B erreicht.

Unter Bezugnahme auf die vorerläuterte Variante mit überhitztem Wasserdampf als Betriebsmittel B oder als Alternative dazu ist es besonders vorteilhaft, als Betriebsmittel Gase oder Dämpfe B zu verwenden, die eine höhere und insbesondere wesentlich höhere Schallgeschwindigkeit als Luft (343 m/s) aufweisen. Speziell werden als Betriebsmittel Gase oder Dämpfe B verwendet, die eine Schallgeschwindigkeit von wenigstens 450 m/s aufweisen. Damit wird die Erzeugung und die Ausbeute feinster Partikel gegenüber Verfahren mit anderen Betriebsmitteln, wie sie gemäß Kenntnissen aus der Praxis herkömmlicherweise eingesetzt werden, deutlich verbessert und somit das Verfahren insgesamt optimiert.

Als Betriebsmittel B wird ein Fluid verwendet, bevorzugt der bereits erwähnte Wasserdampf, aber auch Wasserstoffgas oder Heliumgas.

In einer bevorzugten Ausführungsform ist die Strahlmühle 1, bei der es -sich insbesondere um eine Fließbettstrahlmühle oder eine Dichtbettstrahlmühle oder eine Spiralstrahlmühle handelt, mit dem integrierten dynamischen Windsichter 7 zur Erzeugung feinster Partikel entsprechend so gestaltet oder ausgelegt oder mit geeigneten Einrichtungen versehen, daß die Drehzahl des Sichtrotors oder Sichtrads 8 des Windsichters 7 und das innere Verstärkungsverhältnis so gewählt oder eingestellt oder regelbar oder steuerbar sind, daß die Umfangsgeschwindigkeit des Betriebsmittels B am Tauchrohr oder Austrittsstutzen 20 bis zum 0,8-fachen, vorzugsweise bis zum 0,7-fachen und besonders bevorzugt bis zum 0,6-fachen der Schallgeschwindigkeit des Betriebsmittels B erreicht.

Weiterhin ist die Strahlmühle 1 bevorzugt mit einer Quelle, wie beispielsweise der Reservoir- oder Erzeugungseinrichtung 18 für Wasserdampf oder überhitzten Wasserdampf oder einer anderen geeigneten Reservoir- oder Erzeugungseinrichtung, für ein Betriebsmittel B ausgestattet oder ist ihr eine solche Betriebsmittelquelle zugeordnet, woraus für den Betrieb ein Betriebsmittel B mit einer höheren und insbesondere wesentlich höheren Schallgeschwindigkeit als Luft (343 m/s), wie vorzugsweise einer Schallgeschwindigkeit von wenigstens 450 m/s, eingespeist wird. Diese Betriebsmittelquelle, wie beispielsweise die Reservoir- oder Erzeugungseinrichtung 18 für Wasserdampf oder überhitzten Wasserdampf, enthält Gase oder Dämpfe B zur Verwendung beim Betrieb der Strahlmühle 1, und zwar insbesondere den bereits oben erwähnten Wasserdampf, wobei aber auch Wasserstoffgas oder Heliumgas bevorzugte Alternativen darstellen.

Insbesondere bei der Verwendung von heißem Wasserdampf als Betriebsmittel B ist es vorteilhaft, mit Dehnungsbögen (nicht gezeigt) ausgestattete Leitungseinrichtungen 19, die dann auch als Dampfzufuhrleitung zu bezeichnen sind, zu den Einlaß- oder Mahldüsen 9 vorzusehen, also vorzugsweise dann, wenn die Dampfzufuhrleitung an eine Wasserdampfquelle als Reservoir- oder Erzeugungseinrichtung 18 angeschlossen ist.

Ein weiterer vorteilhafter Aspekt beim Einsatz von Wasserdampf als Betriebsmittel B besteht darin, die Strahlmühle 1 mit einer möglichst kleinen Oberfläche zu versehen, oder mit anderen Worten, die Strahlmühle 1 hinsichtlich einer möglichst kleinen Oberfläche zu optimieren. Gerade im Zusammenhang mit dem Wasserdampf als Betriebsmittel B ist es besonders vorteilhaft, Wärmeaustausch oder Wärmeverlust und damit Energieverlust im System zu vermeiden. Diesem Zweck dient auch die weitere alternative oder zusätzliche Ausgestaltungsmaßnahme, nämlich die Komponenten der Strahlmühle 1 zur Vermeidung von Massenanhäufungen auszulegen oder dahingehend zu optimieren. Dies kann beispielsweise durch Verwendung von möglichst dünnen Flanschen in den Leitungseinrichtungen 19 und zum Anschluß der Leitungseinrichtungen 19 realisiert werden.

Energieverlust und auch andere strömungsrelevante Beeinträchtigungen können ferner eingedämmt oder vermieden werden, wenn die Komponenten der Strahlmühle 1 zur Vermeidung von Kondensation ausgelegt oder optimiert sind. Es können zu diesem Zweck sogar spezielle Einrichtungen (nicht gezeigt) zur Kondensationsvermeidung enthalten sein. Weiterhin ist es von Vorteil, wenn die Strömungswege zumindest weitgehend vorsprungsfrei oder dahingehend optimiert sind. In anderen Worten wird mit diesen Ausgestaltungsvarianten einzeln oder in beliebigen Kombinationen das Prinzip umgesetzt, möglichst viel oder alles zu vermeiden, was kalt werden kann und wo sich somit Kondensation einstellen kann.

Weiterhin ist es vorteilhaft und daher bevorzugt, wenn der Sichtrotor eine mit abnehmendem Radius, also zu

seiner Achse hin zunehmende lichte Höhe aufweist, wobei insbesondere die durchströmte Fläche des Sichtrotors zumindest annähernd konstant ist. Zunächst oder alternativ kann eine Feingutaustrittskammer vorgesehen sein, die in Strömungsrichtung eine Querschnittserweiterung aufweist.

Eine besonders bevorzugte Ausgestaltung besteht bei der Strahlmühle 1 darin, daß der Sichtrotor 8 ein auswechselbares, mitrotierendes Tauchrohr 20 aufweist.

Nachfolgend werden unter Bezugnahme auf die Figuren 4 und 5 weitere Details und Varianten bevorzugter Ausgestaltungen der Strahlmühle 1 und ihrer Komponenten erläutert.

Die Strahlmühle 1 enthält bevorzugt, wie der schematischen Darstellung in Fig. 4 zu entnehmen ist, einen integrierten Windsichter 7, bei dem es sich beispielsweise bei Bauarten der Strahlmühle 1 als Fließbettstrahlmühle oder als Dichtbettstrahlmühle oder als Spiralstrahlmühle um einen dynamischen Windsichter 7 handelt, der vorteilhafterweise im Zentrum der Mahlkammer 3 der Strahlmühle 1 angeordnet ist. In Abhängigkeit von Mahlgasvolumenstrom und Sichterdrehzahl kann die angestrebte Feinheit des Mahlguts beeinflußt werden.

Bei dem Windsichter 7 der Strahlmühle 1 gemäß Fig. 4 wird der gesamte vertikale Windsichter 7 von einem Sichtergehäuse 21 umschlossen, das im wesentlichen aus dem Gehäuseoberteil 22 und dem Gehäuseunterteil 23 besteht. Das Gehäuseoberteil 22 und das Gehäuseunterteil 23 sind am oberen bzw. unteren Rand mit je einem nach außen gerichteten Umfangsflansch 24 bzw. 25 versehen. Die beiden Umfangsflansche 24, 25 liegen im Einbau- oder Funktionszustand des Windsichters 8 aufeinander und sind durch geeignete Mittel gegeneinander fixiert. Geeignete Mittel zum Fixieren sind beispielsweise Schraubverbindungen (nicht gezeigt). Als lösbare Befestigungsmittel können auch Klammern (nicht gezeigt) oder dergleichen dienen.

An praktisch jeder gewünschten Stelle des Flanschumfangs sind beide Umfangsflansche 24 und 25 durch ein Gelenk 26 miteinander so verbunden, daß das Gehäuseoberteil 22 nach dem Lösen der Flanschverbindungsmittel gegenüber dem Gehäuseunterteil 23 nach oben in Richtung des Pfeils 27 geschwenkt werden kann und das Gehäuseoberteil 22 von unten sowie das Gehäuseunterteil 23 von oben zugänglich sind. Das Gehäuseunterteil 23 seinerseits ist zweiteilig ausgebildet und besteht im wesentlichen aus dem zylindrischen Sichtraumgehäuse 28 mit dem Umfangsflansch 25 an seinem oberen offenen Ende und einem Austragkonus 29, der sich nach unten kegelförmig verjüngt. Der Austragkonus 29 und das Sichtraumgehäuse 28 liegen am oberen bzw. unteren Ende mit Flanschen 30, 31 aufeinander und die beiden Flansche 30, 31 von Austragkonus 29 und Sichtraumgehäuse 28 sind wie die Umfangsflansche 24, 25 durch lösbare Befestigungsmittel (nicht gezeigt) miteinander verbunden. Das so zusammengesetzte Sichtergehäuse 21 ist in oder an Tragarmen 28a aufgehängt, von denen mehrere möglichst gleichmäßig beabstandet um den Umfang des Sichter- oder Verdichtergehäuses 21 des Windsichters 7 der Strahlmühle 1 verteilt sind und am zylindrischen Sichtraumgehäuse 28 angreifen.

Wesentliches Teil der Gehäuseeinbauten des Windsichters 7 ist wiederum das Sichtrad 8 mit einer oberen Deckscheibe 32, mit einer dazu axial beabstandeten unteren abströmseitigen Deckscheibe 33 und mit zwischen den Außenrändern der beiden Deckscheiben 32 und 33 angeordneten, mit diesen fest verbundenen und gleichmäßig um den Umfang des Sichtrades 8 verteilten Schaufeln 34 mit zweckmäßiger Kontur. Bei diesem Windsichter 7 wird der Antrieb des Sichtrades 8 über die obere Deckscheibe 32 bewirkt, während die untere Deckscheibe 33 die abströmseitige Deckscheibe ist. Die Lagerung des Sichtrades 8 umfaßt eine in zweckmäßiger Weise zwangsweise angetriebene Sichtradwelle 35, die mit dem oberen Ende aus dem Sichtergehäuse 21 herausgeführt ist und mit ihrem unteren Ende innerhalb des Sichtergehäuses 21 in fliegender Lagerung drehfest das Sichtrad 8 trägt. Die Herausführung der Sichtradwelle 35 aus dem Sichtergehäuse 21 erfolgt in einem Paar bearbeiteter Platten 36, 37, die das Sichtergehäuse 21 am oberen Ende eines nach oben kegelstumpfförmig verlaufenden Gehäuseendabschnittes 38 abschließen, die Sichtradwelle 35 führen und diesen Wellendurchtritt ohne Behinderung der Drehbewegungen der Sichtratwelle 35 abdichten. Zweckmäßigerweise kann die obere Platte 36 als Flansch drehfest der Sichtradwelle 35 zugeordnet und über Drehlager 35a drehbar auf der unteren Platte 37 abgestützt sein, die ihrerseits einem Gehäuseendabschnitt 38 zugeordnet ist. Die Unterseite der abströmseitigen Deckscheibe 33 liegt in der gemeinsamen Ebene zwischen den Umfangsflanschen 24 und 25, so daß das Sichtrad 8 in seiner Gesamtheit innerhalb des klappbaren Gehäuseoberteils 22 angeordnet ist. Im Bereich des konischen Gehäuseendabschnittes 38 weist das Gehäuseoberteil 22 außerdem einen rohrartigen Produktaufgabestutzen 39 der Mahlgutaufgabe 4 auf, dessen Längsachse parallel zur Drehachse 40 des Sichtrads 8 und seiner Antriebs- oder Sichtradwelle 35 verläuft und der möglichst weit von dieser Drehachse 40 des Sichtrads 8 und seiner Antriebs- oder Sichtradwelle 35 entfernt, am Gehäuseoberteil 22 radial außen liegend angeordnet ist.

In einer besonders bevorzugten Ausführungsform gemäß den Figuren 2 und 3 enthält der integrierte dynamische Windsichter 1 ein Sichtrad 8 und eine Sichtradwelle 35 sowie ein Sichtergehäuse, wie bereits erläutert wurde. Dabei ist zwischen dem Sichtrad 8 und dem Sichtergehäuse 21 ein Sichterspalt 8a definiert und zwischen der Sichtradwelle und dem Sichtergehäuse 21 eine Wellendurchführung 35b gebildet (siehe dazu Figuren 2 und 3). Insbesondere ausgehend von einer mit einem derartigen Windsichter 7 ausgestatteten Strahlmühle 1, wobei die diesbezüglichen Ausführungsbeispiele hierbei nur exemplarisch und nicht als beschränkend zu verstehen sind, wird mit dieser Strahlmühle 1 mit einem integrierten dynamischen Windsichter 7 ein Verfahren zur Erzeugung feinster Partikel durchgeführt. Die Neuerung gegenüber herkömmlichen Strahlmühlen besteht dabei neben der Tatsache, daß der Mahlraum vor der Mahlphase auf

eine Temperatur oberhalb des Taupunktes des Dampfes aufgeheizt wird, darin, daß eine Spaltspühlung von Sichterspalt 8a und/oder Wellendurchführung 35b mit komprimierten Gasen niedriger Energie erfolgt. Das Besondere dieser Ausgestaltung ist gerade die Kombination der Verwendung dieser komprimierten niedrigenergetischen Gase mit dem energiereichen überhitzten Wasserdampf, mit dem die Mühle durch die Mahlstrahleinlässe, insbesondere Mahldüsen oder darin enthaltene Mahldüsen, beschickt wird. Es kommen somit gleichzeitig hochenergetische Medien und niedrigenergetische Medien zum Einsatz.

In der Ausführungsform gemäß den beiden Figuren 4 und 5 einerseits und 2 und 3 andererseits nimmt das Sichtergehäuse 21 den achsgleich zum Sichtrad 8 angeordneten rohrförmigen Austrittsstutzen 20 auf, der mit seinem oberen Ende dicht unterhalb der abströmseitigen Deckscheibe 33 des Sichtrades 8 liegt, ohne jedoch mit diesem verbunden zu sein. An das untere Ende des als Rohr ausgebildeten Austrittsstutzens 20 ist eine Austrittskammer 41 achsgleich angesetzt, die ebenfalls rohrförmig ist, deren Durchmesser jedoch wesentlich größer ist als der Durchmesser des Austrittsstutzens 20 und beim vorliegenden Ausführungsbeispiel zumindest doppelt so groß wie der Durchmesser des Austrittsstutzens 20 ist. Am Übergang zwischen dem Austrittsstutzen 20 und der Austrittskammer 41 liegt also ein deutlicher Durchmessersprung vor. Der Austrittsstutzen 20 ist in eine obere Deckplatte 42 der Austrittskammer 41 eingesetzt. Unten ist die Austrittskammer 41 durch einen abnehmbaren Deckel 43 verschlossen. Die Baueinheit aus Austrittsstutzen 20 und Austrittskammer 41 ist in mehreren Tragarmen 44 gehalten, die sternförmig gleichmäßig um den Umfang der Baueinheit verteilt, mit ihren inneren Enden im Bereich des Austrittsstutzens 20 fest mit der Baueinheit verbunden und mit ihren äußeren Enden am Sichtergehäuse 21 befestigt sind.

Der Austrittsstutzen 20 ist von einem kegelförmigen Ringgehäuse 45 umgeben, dessen unterer, größerer Außendurchmesser zumindest etwa dem Durchmesser der Austrittskammer 41 und dessen oberer, kleinerer Außendurchmesser zumindest etwa dem Durchmesser des Sichtrads 8 entspricht. Die Tragarme 44 enden an der konischen Wand des Ringgehäuses 45 und sind mit dieser Wand fest verbunden, die ihrerseits wieder Teil der Baueinheit aus Austrittsstutzen 20 und Austrittskammer 41 ist.

Die Tragarme 44 und das Ringgehäuse 45 sind Teile der Spüllufteinrichtung (nicht gezeigt), wobei die Spülluft das Eindringen von Materie aus dem Innenraum des Sichtergehäuses 21 in den Spalt zwischen dem Sichtrad 8 oder genauer dessen unterer Deckscheibe 3 und dem Austrittsstutzen 20 verhindert. Um diese Spülluft in das Ringgehäuse 45 und von dort in den freizuhaltenden Spalt gelangen zu lassen, sind die Tragarme 44 als Rohre ausgebildet, mit ihren äußeren Endabschnitten durch die Wand des Sichtergehäuses 21 hindurchgeführt und über einen Ansaugfilter 46 an eine Spülluftquelle (nicht gezeigt) angeschlossen. Das Ringgehäuse 45 ist nach oben durch eine Lochplatte 47 abgeschlossen, und der Spalt selbst kann durch eine axial verstellbare Ringscheibe im Bereich zwischen Lochplatte 47 und unterer Deckscheibe 33 des Sichtrades 8 einstellbar sein.

Der Auslaß aus der Austrittskammer 41 wird von einem Feingutaustragrohr 48 gebildet, das von außen in das Sichtergehäuse 21 hineingeführt ist und in tangentialer Anordnung an die Austrittskammer 41 angeschlossen ist. Das Feingutaustragrohr 48 ist Bestandteil des Produktauslasses 6. Der Verkleidung der Einmündung des Feingutaustragrohrs 48 an die Austrittskammer 41 dient ein Abweiskegel 49.

Am unteren Ende des konischen Gehäuseendabschnitts 38 sind in horizontaler Anordnung eine Sichtlufteintrittsspirale 50 und ein Grobgutaustrag 51 dem Gehäuseendabschnitt 38 zugeordnet. Die Drehrichtung der Sichtlufteintrittsspirale 50 ist der Drehrichtung des Sichtrads 8 entgegengerichtet. Der Grobgutaustrag 51 ist dem Gehäuseendabschnitt 38 abnehmbar zugeordnet, wobei dem unteren Ende des Gehäuseendabschnitts 38 ein Flansch 52 und dem oberen Ende des Grobgutaustrags 51 ein Flansch 53 zugeordnet und beide Flansche 52 und 53 wiederum durch bekannte Mittel lösbar miteinander verbunden sind, wenn der Windsichter 7 betriebsbereit ist.

Die auszulegende Dispersionszone ist mit 54 bezeichnet. An der Innenkante bearbeitete (angefaste) Flansche für eine saubere Strömungsführung und eine einfache Auskleidung sind mit 55 bezeichnet.

Schließlich ist noch an die Innenwand des Austrittsstutzens 20 ein auswechselbares Schutzrohr 56 als Verschlußteil angelegt und kann ein entsprechendes auswechselbares Schutzrohr 57 an die Innenwand der Austrittskammer 41 angelegt sein.

Zu Beginn des Betriebs des Windsichters 7 im dargestellten Betriebszustand wird über die Sichtlufteintrittsspirale 50 Sichtluft in den Windsichter 7 unter einem Druckgefälle und mit einer zweckentsprechend gewählten Eintrittsgeschwindigkeit eingeführt. Infolge der Einführung der Sichtluft mittels einer Spirale insbesondere in Verbindung mit der Konizität des Gehäuseendabschnittes 38 steigt die Sichtluft spiralförmig nach oben in den Bereich des Sichtrades 8. Gleichzeitig wird das "Produkt" aus Feststoffpartikeln unterschiedlicher Masse über den Produktaufgabestutzen 39 in das Sichtergehäuse 21 eingegeben. Von diesem Produkt gelangt das Grobgut, d. h. der Partikelanteil mit größerer Masse, entgegen der Sichtluft in den Bereich des Grobgutaustrages 51 und wird zur Weiterverarbeitung bereitgestellt. Das Feingut, d. h. der Partikelanteil mit geringerer Masse, wird mit der Sichtluft vermischt, gelangt von außen nach innen radial durch das Sichtrad 8 in den Austrittsstutzen 20, in die Austrittskammer 41 und schließlich über ein Feingutaustrittsrohr 48 in einen Feingutauslaß 58 und von dort in ein Filter, in dem das Betriebsmittel in Form eines Fluids, wie beispielsweise Luft, und Feingut voneinander getrennt werden. Gröbere Feingutbestandteile werden aus dem Sichtrad 8 radial herausgeschleudert und dem Grobgut zugemischt, um das Sichtergehäuse 21 mit dem Grobgut zu verlassen

oder so lange im Sichtergehäuse 21 zu kreisen, bis es zu Feingut einer solchen Körnung geworden ist, daß es mit der Sichtluft ausgetragen wird.

Infolge der abrupten Querschnittserweiterung vom Austrittsstutzen 20 zur Austrittskammer 41 findet dort eine deutliche Verringerung der Strömungsgeschwindigkeit des Feingut-Luft-Gemisches statt. Dieses Gemisch wird also mit sehr geringer Strömungsgeschwindigkeit durch die Austrittskammer 41 über das Feingutaustrittsrohr 48 in den Feingutauslaß 58 gelangen und an der Wand der Austrittskammer 41 nur in geringem Maße Abrieb erzeugen. Deswegen ist das Schutzrohr 57 auch nur eine höchst vorsorgliche Maßnahme. Die aus Gründen einer guten Trenntechnik hohe Strömungsgeschwindigkeit im Sichtrad 8 herrscht jedoch noch im Austragoder Austrittsstutzen 20, weshalb das Schutzrohr 56 wichtiger ist als das Schutzrohr 57. Besonders bedeutsam ist der Durchmessersprung mit einer Durchmessererweiterung beim Übergang vom Austrittsstutzen 20 in die Austrittskammer 41.

Im übrigen kann der Windsichter 7 durch die Unterteilung des Sichtergehäuses 21 in der beschriebenen Weise und die Zuordnung der Sichterkomponenten zu den einzelnen Teilgehäusen wiederum gut gewartet werden und können schadhaft gewordene Komponenten mit relativ geringem Aufwand und innerhalb kurzer Wartungszeiten ausgewechselt werden.

Während in der schematischen Darstellung der Fig. 4 und 2 das Sichtrad 8 mit den beiden Deckscheiben 32 und 33 und dem zwischen diesen angeordneten Schaufelkranz 59 mit den Schaufeln 34 noch in bereits bekannter, üblicher Form mit parallelen und parallelflächigen Deckscheiben 32 und 33 dargestellt ist, ist in Fig. 5 und 3 das Sichtrad 8 für ein weiteres Ausführungsbeispiel des Windsichters 7 einer vorteilhaften Weiterbildung dargestellt.

Dieses Sichtrad 8 gemäß Fig. 5 und 3 enthält zusätzlich zu dem Schaufelkranz 59 mit den Schaufeln 34 die obere Deckscheibe 32 und die dazu axial beabstandete untere abströmseitige Deckscheibe 33 und ist um die Drehachse 40 und damit die Längsachse des Windsichters 7 drehbar. Die diametrale Ausdehnung des Sichtrades 8 ist senkrecht zur Drehachse 40, d. h. zur Längsachse des Windsichters 7, unabhängig davon, ob die Drehachse 40 und damit die genannte Längsachse senkrecht steht oder horizontal verläuft. Die untere abströmseitige Deckscheibe 33 umschließt konzentrisch den Austrittsstutzen 20. Die Schaufeln 34 sind mit beiden Deckscheiben 33 und 32 verbunden. Die beiden Deckscheiben 32 und 33 sind nun abweichend vom Stand der Technik konisch ausgebildet, und zwar vorzugsweise derart, daß der Abstand der oberen Deckscheibe 32 von der abströmseitigen Deckscheibe 33 vom Kranz 59 der Schaufeln 34 nach innen, d. h. zur Drehachse 40 hin, größer wird, und zwar vorzugsweise kontinuierlich, wie beispielsweise linear oder nichtlinear, und besonders bevorzugt so, daß die Fläche des durchströmten Zylindermantels für jeden Radius zwischen Schaufelaustrittskanten und Austrittsstutzen 20 zumindest annähernd konstant bleibt. Die infolge des kleiner werdenden Radius bei bekannten Lösungen geringer werdende Abströmgeschwindigkeit bleibt bei dieser Lösung zumindest ungefähr konstant.

Neben der vorstehend und in Fig. 5 und 3 erläuterten Variante der Gestaltung der oberen Deckscheibe 32 und der unteren Deckscheibe 33 ist es auch möglich, daß nur eine dieser beiden Deckscheiben 32 oder 33 in der erläuterten Weise konisch ausgebildet ist und die andere Deckscheibe 33 bzw. 32 eben ist, wie dies im Zusammenhang mit dem Ausführungsbeispiel gemäß Fig. 4 für beide Deckscheiben 32 und 33 der Fall ist. Insbesondere kann dabei die Form der nicht parallelflächigen Deckscheibe derart sein, daß die Fläche des durchströmten Zylindermantels für jeden Radius zwischen Schaufelaustrittskanten und Austrittsstutzen 20 zumindest annähernd konstant bleibt.

Die Vermahlungs- und Sichtungsparameter werden vorzugsweise so gewählt, daß das gemahlene Produkt

- einen $d_{50}$-Wert von 150 bis 2000 nm, vorzugsweise 200 bis 1500 nm, besonders bevorzugt 250 bis 1200 nm, ganz besonders bevorzugt 300 bis 900 nm und speziell bevorzugt 350 bis 600 nm;
- einen $d_{90}$-Wert von 500 bis 7000 nm, vorzugsweise 700 bis 6500 nm, besonders bevorzugt 800 bis 6000 nm, ganz besonders bevorzugt 900 bis 6000 nm und speziell bevorzugt 1000 bis 5000 nm

aufweist.

Besonders bevorzugt ist der Durchmesser der Mahldüsen 2 bis 11 mm, der Düsentyp Laval, die Düsenzahl 3 bis 5, der Mühleninnendruck 0,8 bis 1,5 bar(abs.), der Eintrittsdruck des Mahlmediums 12 bis 300 bar (abs.), die Eintrittstemperatur des Mahlmediums 190 bis 600°C, die Mühlenaustrittstemperatur des Mahlmediums 105 bis 250°C, die Sichterdrehzahl 100 bis 6000 $min^{-1}$, der Austrittstutzendurchmesser (Tauchrohrdurchmesser) 100 bis 500 mm.

Bei einem ganz besonders bevorzugten Verfahren wird während des Vermahlungsschritts eine Lösung eines mehrwertigen Kations, beispielsweise $Al^{3+}$, speziell bevorzugt eines zweiwertigen Kations, ganz besonders bevorzugt eines Kations aus der Gruppe bestehend aus $Mg^{2+}$, $Ca^{2+}$, $Sr^{2+}$, $Ba^{2+}$ und $Zn^{2+}$ zugegeben. Die Zugabe dieser Additive erfolgt über eine Zweistoffdüse.

Die beschriebene Fällungskieselsäure fungiert als Thixotropiermittel, das bei Zugabe zu flüssigen Systemen, vorzugsweise unpolaren und mäßig polaren Systemen, besonders bevorzugt UPE-Formulierungen, im allgemeinen die Steigung der Rheologiekurve ändern wird, vorzugsweise ohne unerwünschte Verschlechterung der Eigenschaften der gehärteten Zusammensetzung.

Besonders bevorzugte flüssige Systeme, die die erfindungsgemäße Fällungskieselsäure enthalten, sind u. a.

ungesättigte Polyester, Gelcoats, Laminatharze, Epoxidharze, PVC-Plastisol, Polysulfid, Acrylharze, Silikone, Anstrichmittel und Beschichtungen, Tinten, Klebstoffe, Dichtungsmassen, Pflanzenschutzsysteme, Farbkonzentrate, Kosmetika, Zahnpasta, Kabelgele und Weichmacher.

Hierbei ist die Menge an Fällungskieselsäure in dem erfindungsgemäßen flüssigen System nicht besonders beschränkt und kann gemäß den gewünschten Ergebnissen variiert werden. Ohne Festlegung belaufen sich typische Mengen auf 0,1 bis 15 Gew.-%, vorzugsweise 0,5 bis 10 Gew.-% und besonders bevorzugt 0,5 bis 2,5 Gew.-%, bezogen auf das Gesamtgewicht der flüssigen Zusammensetzung, einschließlich 1, 2, 3, 4, 5, 6, 7, 8, 9, 10, 11, 12, 13, 14 und 15% sowie alle dazwischen liegenden Werte und Unterbereiche.

Zu den im Rahmen der vorliegenden Erfindung eingesetzten Fällungskieselsäureprodukten gehören synthetische Siliciumdioxidmaterialien, die durch Ansäuern eines Alkalimetallsilikats wie Natriumsilikat mit einem Ansäuerungsmittel wie Schwefelsäure unter kontrollierten Reaktionsbedingungen hergestellt werden. Fällungskieselsäure unterscheidet sich von pyrogen hergestellter Kieselsäure, die in der Technik gut bekannt ist und durch Hydrolyse von Siliciumtetrachloriddampf in einer Wasserstoff-Sauerstoff-Flamme bei erhöhter Temperatur hergestellt wird. Pyrogen hergestellte Kieselsäure wird im Handel unter Handelsnamen wie Cab-o-Sil® und Aerosil® vertrieben.

Neben der oben beschriebenen Fällungskieselsäure können die erfindungsgemäßen flüssigen Systeme gegebenenfalls mindestens ein anorganisches und/oder organisches Pigment enthalten. Repräsentative Pigmente verleihen den offenbarten flüssigen Zusammensetzungen Färbung (einschließlich Weiß- oder Schwarzfärbung) und Opazität und werden in der Regel in Form einer Paste oder anderen Dispersion des trockenen Pigments in einem verträglichen Träger erhalten, beispielsweise mit einem Trockenpigmentgehalt von etwa 15 bis etwa 40 Gew.-%, bezogen auf das Gewicht der Dispersion. Die Pigmentdispersion kann auch Netzmittel, Dispergiermittel und Inhibitoren in untergeordneten Mengen enthalten. Geeignete Trägerharze sind u. a. ungesättigte Polyesterharze, gesättigte Polyesterharze, Urethandiacrylate, Acrylsilikone oder andere Träger, die dem Fachmann geläufig sein werden. Die Pigmentdispersion kann beispielsweise durch Zugabe des Pigments und anderer Bestandteile zum Trägerharz und anschließendes Mischen in einem Mahlaggregat hergestellt werden. Repräsentative Pigmente sind u. a. behandelte oder unbehandelte organische oder anorganische Pigmente und Mischungen davon, wie Titandioxid, Ruß, Eisenoxidschwarz, Phthaloblau, Phthalogrün, Chinacridonmagenta, LF Orange, Arylidrot, Chinacridonrot, Rotoxid, Chinacridonviolett, LF Primrose Yellow, Gelboxid und andere Pigmente, die dem Fachmann geläufig sein werden. Geeignete Pigmente sind im Handel von verschiedenen Lieferanten einschließlich Ciba Specialty Chemicals, Sun Chemical, Clariant und Cabot Corp. erhältlich. Die Pigmente werden vorzugsweise in einer so großen Menge verwendet, daß sich eine opake gehärtete Beschichtung mit dem gewünschten Dickenniveau ergibt, beispielsweise mit Pigmentdispersionsgewichten von etwa 1 bis etwa 30 Gew.-%, etwa 5 bis etwa 25 Gew.-% oder etwa 5 bis etwa 20 Gew.-%, bezogen auf die flüssige Zusammensetzung.

Weiterhin können die flüssigen Zusammensetzungen gegebenenfalls mindestens einen streckenden Füllstoff enthalten, wie Ton, Kalksteinmehl, Glimmer, Talk, Aluminiumtrihydrat, Bariumsulfat, standardmäßige Fällungskieselsäure, pyrogen hergestellte Kieselsäure und dergleichen. Die streckenden Füllstoffe können auch zur Thixotropierung der erfindungsgemäßen Gelcoats beitragen. Auch wenn hervorzuheben ist, daß erfindungsgemäße flüssige Zusammensetzungen, die eine Fällungskieselsäure mit physikalisch-chemischen Eigenschaften wie oben beschrieben enthalten, ohne Verschlechterung ihrer Leistungsfähigkeit ohne zusätzliche streckende Füllstoffe hergestellt werden können, können derartige zusätzliche Füllstoffe auf Wunsch trotzdem zugegeben werden. Die Mengen derartiger Füllstoffe unterliegen keinerlei Beschränkung, wenngleich sie in der Regel in Mengen von etwa 5 bis etwa 40 Gew.-%, bezogen auf die Gelcoatzusammensetzung zugegeben werden.

Wenn es sich bei den erfindungsgemäßen flüssigen Zusammensetzungen um Marinegelcoatzusammensetzungen handelt, sind sie vorzugsweise hinreichend frei von durch Wasser angreifbarem (beispielsweise für Wasser zugänglichem und wasseranfälligem) streckendem Füllstoff, so daß die gehärtete Beschichtung nach langem Eintauchen in Wasser nicht weiß anläuft. Typische streckende Füllstoffe sind in diesem Fall u. a. geschnittene oder gemahlene Glasfasern, Talk, Siliciumdioxid, Titandioxid, Wollastonit, Glimmer, Aluminiumoxidtrihydrat, Ton, Calciumcarbonat, Magnesiumcarbonat, Bariumcarbonat, Calciumsulfat, Magnesiumsulfat und Bariumsulfat. Zwar sind kleine Mengen von durch Wasser angreifbarem streckendem Füllstoff möglicherweise tolerierbar, aber vorzugsweise werden in der Gelcoatzusammensetzung höchstens etwa 2 Gew.-% und besonders bevorzugt höchstens etwa 1 Gew.-% einschließlich höchstens 0,8, 0,5, 0,3 und 0,1 Gew.-% an durch Wasser angreifbarem streckendem Füllstoff eingesetzt.

In den offenbarten flüssigen Zusammensetzungen können verschiedenste ungesättigte Polyesterharze eingesetzt werden. Einige repräsentative ungesättigte Polyesterharze werden in den US-Patentschriften 4,742,121, 5,567,767, 5,571,863, 5,688,867, 5,777, 053, 5,874,503 und 6,063,864 und in den veröffentlichen PCT-Anmeldungen WO 94107674 Al, WO 00123495 A1 und WO 031101918A2 beschrieben. Polyesterharze können durch Kondensation einer oder mehrerer Carbonsäuren (wie mono-, di- oder polyfunktioneller ungesättigter oder gesättigter Carbonsäuren) oder ihrer Derivate (wie Säureanhydriden, C-Alkylestern usw.) mit einem oder mehreren Alkoholen (einschließlich monofunktioneller, difunktioneller und polyfunktioneller Alkohole) hergestellt werden. Bei der Carbonsäure bzw. dem Carbonsäurederivat kann es sich beispielsweise um ein Gemisch aus einer ungesättigten Carbonsäure oder einem Derivat davon und einer gesättigten Carbonsäure oder einem Derivat davon handeln. Die ungesättigten Carbonsäuren oder ihre Derivate können beispielsweise etwa 3 bis etwa 12 Kohlenstoffatome, etwa 3 bis etwa 8 Kohlenstoffatome oder etwa 4 bis etwa 6 Kohlenstoffatome aufweisen. Repräsentative ungesättigte Carbonsäuren und ihre Derivate sind u. a. Maleinsäure, Fumarsäure, Chlormaleinsäure, Itaconsäure, Citraconsäure, Methylenglutarsäure, Mesaconsäure, Acrylsäure, Methacrylsäure und Ester oder Anhydride davon. Repräsentative ungesättigte Carbonsäuren und ihre Derivate sind u. a. Maleinsäure, Fumarsäure, Fumarsäureester und Anhydride davon. Eine ungesättigte Carbonsäure oder ihr Derivat kann beispielsweise in einer Menge von etwa 20 bis etwa 90 Molprozent, etwa 35 bis etwa 75 Molprozent oder etwa 50 bis etwa 65 Molprozent, bezogen auf die zur Herstellung des ungesättigten Polyesterharzes verwendeten Säuren oder Säurederivate, vorliegen. Die gesättigten Carbonsäuren und ihre Derivate können beispielsweise etwa 8 bis etwa 18 Kohlenstoffatome, etwa 8 bis etwa 15 Kohlenstoffatome oder etwa 8 bis etwa 12 Kohlenstoffatome aufweisen. Repräsentative gesättigte Carbonsäuren und ihre Derivate können aromatisch, aliphatisch oder eine Kombination davon sein; hierzu gehören Bernsteinsäure, Glutarsäure, d-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Hexahydrophthalsäure oder -anhydrid, Tetrachlorphthalsäure, Chlorendicsäure oder -anhydrid, Dodecandicarbonsäuren, Nadic-Anhydrid, cis-5-Norbornen- 2,3-dicarbonsäure oder -anhydrid, Dimethyl-2,6-naphthendicarboxylat, Dimethyl-2,6-naphthendicarbonsäure, Naphthendicarbonsäure oder -anhydrid und 1,4-Cyclohexandicarbonsäure. Andere repräsentative Carbonsäuren sind u. a. Ethylhexansäure, Propionsäure, Trimellitsäure, Benzoesäure, 1,2,4-Benzoltricarbonsäure, 1,2,4,5-Benzoltetracarbonsäure und Anhydride davon. Repräsentative aromatische gesättigte Carbonsäuren sind u. a. o-Phthalsäure, Isophthalsäure und ihre Derivate. Repräsentative aliphatische gesättigte Carbonsäuren sind u. a. 1,4-Cyclohexandicarbonsäure, Hexahydrophthalsäure, Adipinsäure und ihre Derivate. Die ungesättigten Carbonsäuren oder ihre Derivate können beispielsweise in einer Menge von etwa 10 bis etwa 80 Molprozent, etwa 25 bis etwa 65 Molprozent oder etwa 35 bis etwa 50 Molprozent, bezogen auf die zur Herstellung des ungesättigten Polyesterharzes verwendeten Säuren oder Säurederivate, vorliegen. Außerdem kann eine aromatische Carbonsäure beispielsweise in einer Menge von etwa 0 bis 100 Prozent, 0 bis etwa 50 Prozent oder 0 bis etwa 25 Prozent, bezogen auf die zur Herstellung des ungesättigten Polyesterharzes verwendeten gesättigten Säuren oder Säurederivate, vorliegen, und eine aliphatische Carbonsäure kann beispielsweise in einer Menge von 0 bis 100 Prozent, etwa 50 bis 100 Prozent oder etwa 75 bis 100 Prozent, bezogen auf die zur Herstellung des ungesättigten Polyesterharzes verwendeten gesättigten Säuren oder Säurederivate, vorliegen.

Repräsentative Alkohole zur Verwendung bei der Herstellung von ungesättigten Polyesterharzen sind u. a. Alkandiole und Oxaalkandiole wie Ethylenglykol, 1,2-Propylenglykol, Propan-1,3-diol, 1,3-Butylenglykol, Buten-1,4-diol, Hexan-1,6-diol, Diethylenglykol, Triethylenglykol, Polyethylenglykol, Cyclohexan-1,2-diol, 2,2-Bis-(p-hydroxycyclohexyl)-propan, 5-Norbornen-2,2-dimethylol, 2,3-Norbornendiol, Cyclohexandimethanol, und dergleichen. Alkohole mit Neo-Struktur wie 1,2-Propandiol, 2-Methyl-1,3-propandiol, 2,2-Dimethylheptandiol, 2,2-Dimethyloctandiol, 2,2-Dimethyl-1,3-propandiol, Neopentylglykol, Pentaerythrit, Dipentaerythrit, Tripentaerythrit, Trimethylolpropan, Di-trimethylolpropan, 2,2,4-Trimethyl-1,3-pentandiol, 2-Butyl-2-ethyl-1,3-propandiol, 3-Hydroxy-2,2-dimethylpropyl-3-hydroxy-2,2-dimethyrpolpanat und dergleichen können bevorzugt sein. Zur Herstellung des ungesättigten Polyesterharzes können auch monofunktionelle Alkohole verwendet werden. Repräsentative monofunktionelle Alkohole sind u. a. Benzylalkohol, Cyclohexanol, 2-Ethylhexylalkohol, 2-Cyclohexylethanol, 2,2-Dimethyl-1-propanol und Laurylalkohol. Wird ein monofunktioneller Alkohol verwendet, so kann die Menge beispielsweise weniger als etwa 10 Molprozent oder weniger als etwa 5 Molprozent, bezogen auf die zur Herstellung des ungesättigten Polyesterharzes verwendeten Alkohole, betragen.

Ungesättigtes Polyesterharz kann nach Veresterungstechniken hergestellt werden, die dem Fachmann geläufig sein werden, beispielsweise durch Verwendung von Katalysatoren (beispielsweise Veresterungs- oder Umesterungskatalysatoren), die dem Fachmann ebenfalls geläufig sein werden. Die Veresterung wird normalerweise durchgeführt, bis der Polyester eine dem gewünschten Molekulargewicht entsprechende Säurezahl erreicht. Beispielsweise kann die Endsäurezahl etwa 7 bis etwa 30, das zahlenmittlere Molekulargewicht (Mn) etwa 800 bis etwa 3600 und das gewichtsmittlere Molekulargewicht (Mw) etwa 1,300 bis etwa 11,000 betragen. Die Säurezahl kann durch Erhöhung der Reaktionstemperatur, Durchführung der Reaktion über einen längeren Zeitraum oder Zugabe eines Säureneutralisationsmittels verringert werden, wie dem Fachmann geläufig sein wird.

Ungesättigtes Polyesterharz kann auch durch Umsetzung eines Oligoesters mit einem gewichtsmittleren Molekulargewicht von etwa 200 bis etwa 4000 mit einem Diisocyanat und einem Hydroxyalkyl(meth)acrylat zu einem Urethanacrylat mit Vinylendgruppen hergestellt werden, wie in der oben erwähnten US20060167208A1 beschrieben. Das Urethanacrylatharz kann als solches oder im Gemisch mit einem anderen ungesättigten Polyesterharz wie einem aliphatischen oder aromatischen ungesättigten Polyesterharz, verwendet werden.

In einer UPE-Zusammensetzung kann das ungesättigte Polyesterharz beispielsweise etwa 25 bis etwa 94 Gew.-%, etwa 30 bis etwa 89 Gew.-% oder etwa 40 bis etwa 79 Gew.-% der UPE-Zusammensetzung ausmachen, ist aber nicht auf diese Werte beschränkt.

Neben den oben offenbarten Komponenten können die erfindungsgemäßen flüssigen Zusammensetzungen zusätzliche Komponenten enthalten, die nachstehend beschrieben werden.

Es können reaktive Verdünnungsmittel verwendet werden. Repräsentative Beispiele sind Vinylbenzol (Styrolmonomere), Methylmethacrylat (MMA) und nicht in der HAPS-Liste (Hazardous Air Pollutants) aufgeführte reaktive Verdünnungsmittel wie substituierte Styrole (beispielsweise Vinyltoluol, para-tert-Butylstyrol, para-Methylstyrol oder Divinylbenzol); mono-, di- und polyfunktionelle Ester ungesättigter monofunktioneller Säuren (wie Acrylsäure und Methacrylsäure) mit Alkoholen oder Polyolen mit 1 bis etwa 18 Kohlenstoffatomen und mono-, di- und polyfunktionelle Ester ungesättigter monofunktioneller Alkohole mit Carbonsäuren oder deren Derivaten mit 1 bis etwa 18 Kohlenstoffatomen. Andere geeignete reaktive Verdünnungsmittel sind beispielsweise Acrylate, Methacrylate, Phthalate wie Diallylphthalat; Triallylcyanurate; Vinylether und dergleichen. Repräsentative Acrylate und Methacrylate sind u. a. Butandioldimethacrylat, Trimethylolpropantrimethacrylate, Ethylendimethacrylat (EGDMA), Polyethylenglykoldimethacrylat (PEGDMA), Polypropylenglykoldimethacrylat (PPGDMA), Trimethylolpropantrimethacrylat (TMPTMA), Tetramethylolpropantrimethacrylat, Dipropylenglykoldimethacrylat, Isodecylmethacrylat, 1,3-Butylenglykoldimethacrylat, 2-Hydroxyethylmethacrylat (2-HEMA), 1,6-hexandioldimethacrylat (HDODMA), Triethylenglykoldimethacrylat (TEGDMA), Acetoacetoxyethylmethacrylat (AAEM) und die Acrylat-Gegenstücke davon. Es können auch Gemische von reaktiven Verdünnungsmitteln verwendet werden. Bevorzugte reaktive Verdünnungsmittel sind u. a. Styrol, Methylmethacrylat, Vinyltoluol, para-tert-Butylstyrol, para-Methylstyrol, EGDMA, 2-HEMA und Gemische davon. Das reaktive Verdünnungsmittel kann beispielsweise etwa 5 bis etwa 50 Gew.-%, etwa 10 bis etwa 45 Gew.-% oder etwa 20 bis etwa 35 Gew.-% der Zusammensetzung ausmachen.

Als weitere Komponente können ein oder mehrere Promotoren vorliegen. Repräsentative Promotoren zur Verwendung in den UPE-Zusammensetzungen sind Elektronendonatoren, die bei der Zersetzung eines Initiators oder Katalysators helfen und die Härtung der Gelcoatzusammensetzung bei verhältnismäßig niedrigen Temperaturen, beispielsweise bei Temperaturen von etwa 0 bis etwa 30°C, erleichtern oder beschleunigen. Repräsentative Promotoren sind u. a. Metallverbindungen (beispielsweise Cobalt-, Mangan-, Kalium-, Eisen-, Vanadium-, Kupfer- und Aluminiumsalze organischer Säuren); Amine (beispielsweise Dimethylanilin, Diethylanilin, Phenyldiethanolamin, Dimethyl-paratoluidin und 2-Aminopyridin); Lewis-Säuren (beispielsweise Borfluoriddihydrat und Eisen(III)-chlorid); Basen (beispielsweise Tetramethylammoniumhydroxid); quartäre Ammoniumsalze (beispielsweise Trimethylbenzylammoniumchlorid und Tetrakismethylolphosphoniumchlorid); Schwefelverbindungen (beispielsweise Dodecylmercaptan und 2-Mercaptoethanol); Dimethylacetoacetamid, Ethylacetoacetat, Methylacetoacetat und Gemische davon. So können beispielsweise Cobaltsalze organischer Säuren zur Erleichterung der Zersetzung von Peroxidkatalysatoren bei niedriger Temperatur und Härtung der offenbarten Gelcoatzusammensetzungen verwendet werden. Bevorzugte Promotoren sind u. a. Cobaltoctanoat, Kaliumoctanoat, Dimethylacetoacetamid, Ethylacetoacetat, Methylacetoacetat und Gemische davon. Die Promotoren werden in der Regel in einer Menge von etwa 0,05 bis etwa 3 Gew.-% oder etwa 0,05 bis etwa 2 Gew.-%, bezogen auf die UPE-Zusammensetzung, verwendet.

Als weitere Komponente können ein oder mehrere Inhibitoren vorliegen. Inhibitoren helfen bei der Verlängerung oder Aufrechterhaltung der Lagerstabilität der ungehärteten Gelcoatzusammensetzung; hierzu gehören Radikalinhibitoren oder -fänger wie Chinone (beispielsweise Hydrochinon (HQ), Toluhydrochinon (THQ), Mono-tert-butylhydrochinon (MTBHQ), Di-tert-butylhydrochinon (DTBHQ), Napthachinon (NQ) und Monomethyletherhydrochinon (MEHQ)), Butylhydroxytoluol (BHT), tert-Butylcatechol (TBC) und dergleichen. Die Inhibitormenge kann beispielsweise etwa 0,01 bis etwa 0,5 Gew.-%, etwa 0,01 bis etwa 0,3 Gew.-% oder etwa 0,01 bis etwa 0,1 Gew.-%, bezogen auf die Zusammensetzung, betragen.

Die flüssige Zusammensetzung kann auch andere Hilfsstoffe enthalten, die dem Fachmann geläufig sein werden, einschließlich Unterdrückungsmitteln, Oberflächenspannungsmittel, Entlüftungsmittel, Initiatoren und Katalysatoren. Unterdrückungsmittel können die Emissionen leichtflüchtiger organischer Stoffe verringern; hierzu gehören u. a. Substanzen gemäß der oben erwähnten US-PS 5,874,503. Werden Unterdrückungsmittel eingesetzt, so kann ihre Menge beispielsweise bis zu etwa 2 Gew.-%, bis zu etwa 1,5 Gew.-% oder 0,1 bis etwa 1 Gew.-%, bezogen auf die Zusammensetzung, betragen.

Oberflächenspannungsmittel können zur Herabsetzung der Oberflächenspannung an der Oberfläche des gehärteten flüssigen Systems zugegeben werden; hierzu gehören Silikone wie Dimethylsilikone, flüssige Kondensationsprodukte von Dimethylsilandiol, Methylhydrogenpolysiloxane, flüssige Kondensationsprodukte von Methylhydrogensilandiolen, Dimethylsilikonen, Aminopropyltriethoxysilan und Methylhydrogenpolysiloxanen und Fluorkohlenstoff-Tenside wie fluorierte Kaliumalkylcarboxylate, fluorierte quartäre Alkylammoniumiodide, Ammoniumperfluoroalkylcarboxylate, fluorierte Alkylpolyoxyethylenethanole, fluorierte Alkylalkoxylate, fluorierte Alkylester und Ammoniumperfluoroalkylsulfonate. Repräsentative im Handel erhältliche Oberflächenspannungsmittel sind u. a. das Silikontensid BYK-306TM (von BYK-Chemie USA, Inc.), die Silikontenside DCIOO und DC200 (von Dow Corning Co.), die MODAFO-Reihe von Additiven (von Solutia, Inc) und die Silikontenside SF-69 und SF-99 (von GE Silicones Co.). Wird ein Oberflächenspannungsmittel eingesetzt, so kann seine Menge beispielsweise bis zu etwa 1 Gew.-% oder etwa 0,01 bis etwa 0,5 Gew.-%, bezogen auf die Zusammensetzung, betragen.

Als weitere Komponente können ein oder mehrere Entlüftungsmittel vorliegen. Entlüftungsmittel können die Härtung der flüssigen Zusammensetzung ohne Lufteinschlüsse und dadurch bedingte Schwäche oder Porosität unterstützen. Typische Entlüftungsmittel sind u. a. Silikon- oder Nichtsilikon-Substanzen einschließlich Silikon-Entschäumern,

Acrylpolymeren, hydrophoben Feststoffen und auf Mineralöl basierenden Paraffinwachsen. Zu den im Handel erhältlichen Entlüftungsmitteln gehören die Entschäumer BYK-066, BYK-077, BYK-500, BYK-501, BYK- 515, und BYK-555 (von BYK-Chemie USA, Inc.). Wird ein Entlüftungsmittel verwendet, so kann seine Menge beispielsweise bis zu etwa 1,5 Gew.-%, bis zu etwa 1 Gew.-% oder etwa 0,1 bis etwa 0,5 Gew.-%, bezogen auf die Gelcoatzusammensetzung, betragen. Auch wenn Entlüftungsadditive zugegeben werden können, ist hervorzuheben, daß die erfindungsgemäße Fällungskieselsäure verbesserte Entlüftungseigenschaften aufweist, d. h. die Menge an Entlüftungsadditiven kann wesentlich verringert werden.

Initiatoren oder Katalysatoren können der flüssigen Zusammensetzung zum Zeitpunkt des Aufbringens auf eine Formoberfläche zugesetzt werden oder latente Initiatoren oder Katalysatoren sein, die in der Zusammensetzung in der dem Endanwender gelieferten Form enthalten sein können und während des Applikationsvorgangs aktiviert werden. Repräsentative Initiatoren oder Katalysatoren sind u. a. radikalbildende Katalysatoren wie Peroxidkatalysatoren (beispielsweise Benzoylperoxid, Methylethylketonperoxid, Cumolhydroperoxid und dergleichen), Azoalkankatalysatoren und im Handel erhältliche Initiatoren oder Katalysatoren wie der Katalysator Luperox™ DDM9 und DHD9 (von Arkema), der Katalysator HIGH POINT™ 90 (von Chemtura) und der Katalysator CADOX™ L50a (von Akzo Nobel). Repräsentative strahlungsaktivierte oder wärmeaktivierte Initiatoren oder Katalysatoren sind u. a. der Initiator IRGACURE™ 819 (von Ciba Specialty Chemcals) und Cumolhydroperoxid. Wird ein Initiator oder Katalysator verwendet, so kann seine Menge beispielsweise etwa 0,5 bis etwa 3 Gew.-%, etwa 1 bis etwa 2,5 Gew.-% oder etwa 1,2 bis etwa 2 Gew.-%, bezogen auf das Gewicht des ungesättigten Polyesterharzes, betragen.

Die erfindungsgemäßen flüssigen Zusammensetzungen können durch Vereinigen mindestens einer erfindungsgemäßen Fällungskieselsäure mit mindestens einer Polymerverbindung hergestellt werden.

In einer bevorzugten Ausführungsform der Erfindung kann eine flüssige Zusammensetzung beispielsweise hergestellt werden, indem man das ungesättigte Polyesterharz mit einer geeigneten Fällungskieselsäure und den übrigen Bestandteilen in einer beliebigen zweckmäßigen Reihenfolge vermischt.

Gegebenenfalls kann man einige oder alle der reaktiven Verdünnungsmittel am Ende des Vermischens zugeben, um ein Gemisch mit einer bevorzugten Viskosität (beispielsweise einer Viskosität von etwa 2.000 bis etwa 10.000 Centipoise, etwa 3.000 bis etwa 8.000 Centipoise oder etwa 3.500 bis etwa 5.000 Centipoise, gemessen mit einem BROOKFIELD-Viskosimeter von Brookfield Engineering Laboratories und Spindel Nr. 4 bei 25°C) zu erhalten. Zum Erhalt einer Gelcoatzusammensetzung mit einer gewünschten Gel- und Härtungszeit kann man die Promotormenge einstellen oder Inhibitoren zugeben oder einstellen.

Die vorliegende Erfindung stellt ferner Produkte/Gegenstände bereit, die mit der erfindungsgemäßen Flüssigkeit beschichtet sind. Die Beschichtung kann partiell oder komplett sein. Bevorzugt sind insbesondere Gegenstände mit einem erfindungsgemäßen UPE-Überzug in der äußersten Schicht, die der Umgebung ausgesetzt ist.

Zu den zu beschichtenden Produkten/Gegenständen gehören Formkörper aus Kunststoff oder anderen Werkstoffen. Insbesondere werden die beschichteten, gegebenenfalls faserverstärkten Formkörper, in der Regel durch Verteilen einer flüssigen Zusammensetzung auf der Oberfläche einer Form mit einer dem Gegenstand in Negativrelief entsprechenden Oberfläche hergestellt. Nach der Härtung wird die flüssige Zusammensetzung zur äußersten Schicht des Formkörpers und kann der Umgebung ausgesetzt sein. Die flüssige Zusammensetzung wird nach einer beliebigen einer Reihe von Techniken (beispielsweise Streichen, Handauflegen oder Spritzen) und üblicherweise in Form einer verhältnismäßig dicken Schicht, beispielsweise bis zu einer Naßschichtdicke von bis zu etwa 0,8 mm, auf der Formoberfläche verteilt.

Die flüssige Zusammensetzung kann in einer oder mehreren Schichten auf eine Formoberfläche aufgebracht und unter Verwendung von Techniken, die dem Fachmann geläufig sein werden, zumindest teilweise gehärtet werden, gegebenenfalls schichtweise, einschließlich der oben erwähnten Verfahren mit offener oder geschlossener Form. Die Schicht bzw. Schichten der Überzugszusammensetzung können jeweils beispielsweise eine Naßdicke von etwa 0,05 bis etwa 0.8 mm aufweisen.

Hinter der flüssigen Zusammensetzung können unter Verwendung von Techniken, die dem Fachmann geläufig sein werden, verschiedene verstärkende Kunststoffträgermaterialen gebildet werden. Repräsentative verstärkende Kunststoffträgermaterialien sind u. a. faserverstärkte Kunststoffe (die beispielsweise unter Verwendung von Glasfasertuch oder Glasfaserroving hergestellt werden), Kohlefaserverbundwerkstoffe, verstärkte oder unverstärkte Oberflächenformmassen und andere verstärkte oder unverstärkte Kunststoffe wie verstärkte Polyester oder verstärkte Epoxidharze. Die Gesamtdicke des verstärkenden Kunststoffträgers vor der Härtung kann beispielsweise etwa 5 mm bis etwa 125 mm betragen.

Gegebenenfalls kann man zwischen der Beschichtungszusammensetzung und dem verstärkenden Kunststoffträger eine oder mehrere Zwischenschichten wie einen Barriereüberzug, einen Decküberzug oder einen Druckblocker aufbringen. Geeignete Zwischenschichtmaterialien werden dem Fachmann geläufig sein; hierzu gehören Vinylester, Polyester und Epoxidharze. Die Naßdicke derartiger Zwischenschichten wird dem Fachmann ebenfalls geläufig sein und kann beispielsweise etwa 0,1 bis etwa 3 mm betragen.

Typische Beispiele für Produkte/Gegenstände, die mit den erfindungsgemäßen flüssigen Zusammensetzungen

beschichtet sind, sind Teile für Boote, Windräder, Schwimmbäder, Badewannen und Duschen, Sanitärkeramik, Tanks, Gehäuse, Korrosionsschutzanwendungen wie Rohre, Tanks, Leitungen, Schornsteine, Bauplatten, Schiffe, beispielsweise Schiffe der Küstenwache, elektrische Teile, Flugzeug- und Elektronikbauteile und andere Teile, die Licht, Wasser, Lösungsmitteln oder hohen Temperaturen ausgesetzt sind, Auto- und Applikationsaussehensteile und dergleichen. Besonders bevorzugt sind Produkte/Gegenstände, die Wasser ausgesetzt sind. Ganz besonders bevorzugt sind Produkte/Gegenstände, die über einen sehr langen Zeitraum, beispielsweise eine Woche, ohne Unterbrechung Wasser ausgesetzt sind.

Nach der allgemeinen Beschreibung der vorliegenden Erfindung folgen nun zum weiteren Verständnis bestimmte konkrete Beispiele, die hier aber lediglich zum Zweck der Erläuterung angeführt werden und die Erfindung in keiner Weise einschränken sollen, soweit nicht anders vermerkt.

## BEISPIELE

Die Reaktionsbedingungen und die physikalisch/chemischen Daten der in den erfindungsgemäßen Gelcoats verwendeten Fällungskieselsäure wurden mit den folgenden Methoden bestimmt:

### Bestimmung der BET-Oberfläche

Die BET-Oberfläche wurde gemäß DIN ISO 9277 gemessen. Die Verfahrensweise wurde zur Bestimmung der spezifischen N2-Oberfläche von Kieselsäuren und Silikaten nach der BET-Methode verwendet. Mit der hier beschriebenen Methode wurde der Meßwert durch Tieftemperaturadsorption von Stickstoff bei gut definierten Partialdrücken bestimmt. Die Analyse erfolgte als Mehrpunktbestimmung und zeigte im Partialdruckbereich (p/p0) von 0,05-0.2 bei Messung von insgesamt 5 Punkten ein lineares Verhalten.

### Bestimmung des Trocknungsverlusts (loss on drying, LOD)

Der Trocknungsverlust von Kieselsäuren und Silikaten wurde gemäß DIN EN ISO 787-2 bestimmt.

Ein Wägeglas mit abgenommenem Stopfen wurde im Ofen mindestens 1 h auf 105°C erhitzt. Nach Abkühlen im Exsikkator und Einsetzen des Stopfens wurde auf einer Präzisionswaage (mindestens) auf 0,01 g genau gewogen. 10 $\pm$ 1 g der Probe wurden in einer einheitlichen Schicht auf dem Boden des Wägeglases ausgebreitet. Dann wurde der Stopfen wieder eingesetzt und das gefüllte Wägeglas auf 0,01 g genau gewogen ($m_{sp}$). Das Wägeglas wurde vorsichtig geöffnet und mit dem (abgenommenen) Stopfen im Ofen 2 h auf 105 $\pm$ 2°C erhitzt. Danach wurde das Wägeglas langsam mit dem Stopfen verschlossen und im Exsikkator abkühlen gelassen. Das Wägeglas wurde auf 0,01 g genau gewogen ($m_{LOD}$). Das Prüfergebnis wurde mit 1 Dezimalstelle angegeben; Werte von weniger als 0,1% wurden als "< 0,1" aufgeführt.

$$LOD\ in\,[\%] = \frac{(m_{sp} - m_{LOD}) \times 10}{m_{sp}}$$

$m_{sp}$ = Gewicht der Ausgangsprobe [g],
$m_{LOD}$ = Gewicht des Rückstands nach Trocknungsverlust [g].

### Bestimmung des Glühverlusts (loss on ignition, LOI)

1 g Kieselsäure-Ausgangsprobenmaterial wurde genau in einen tarierten Platintiegel eingewogen ($m_{sp}$) und 2 h auf 1000°C erhitzt. Nach Abkühlen im Exsikkator in Gegenwart von $P_2O_5$ wurde der Tiegel erneut gewogen. Das Gewicht nach Glühverlust ($m_{LOI}$) wurde berechnet.
Der Glühverlust (LOI) wurde durch die folgende Gleichung gegeben:

$$LOI\ in\,[\%] = \frac{m_{sp} - m_{LOI}}{m_{sp}} \times 100$$

$m_{sp}$ = Gewicht der Ausgangsprobe [g],
$m_{LOI}$ = Probengewicht nach Glühverlust [g].

Bestimmung der modifizierten Stampfdichte

Bei der "herkömmlichen" Stampfdichtebestimmung nach DIN EN ISO 787-11 kann das Meßergebnis dadurch verfälscht werden, daß die Kieselsäure bereits eine Vorverdichtung erfahren hat, beispielsweise beim Abpacken. Um dies auszuschließen, wurde für die erfindungsgemäßen Kieselsäuren eine "modifizierte Stampfdichte" bestimmt.

Eine mit einem Rundfilter (beispielsweise Typ 598, Schleicher + Schüll) versehene Porzellannutsche (Nenngröße 110, Durchmesser = 12 cm, Höhe = 5,5 cm) wurde bis ungefähr 1 cm unter den oberen Rand locker mit Kieselsäure gefüllt und mit elastischer Folie (Parafilm®) abgedeckt. Die Form und Ausmaße der elastischen Folie waren so zu wählen, daß diese möglichst vollständig mit dem Rand der Porzellannutsche abschließt. Die Nutsche wurde auf eine Saugflasche gesetzt, wonach über einen Zeitraum von 5 min ein Vakuum von -0,7 bar angelegt wurde. Dabei wurde die Kieselsäure durch die angesaugte Folie gleichmäßig kompaktiert. Danach wurde vorsichtig belüftet und die entstandene Kieselsäureplatte durch Stürzen in eine Porzellanschale aus der Filtereinheit entfernt.

Das leicht vorzerkleinerte Material wurde über eine Zentrifugalmühle (ZM 1, Retsch, 0,5 mm Siebeinsatz, Geschwindigkeitsstufe 1, ohne Zyklon, ohne inneren Trichtereinsatz) mit innerer Auffangschale gleichmäßig (die Kieselsäure (Edukt) wurde langsam - Spatel für Spatel - in die Mühlenaufgabe gegeben, die innere Produkt-Auffangschale soll nie ganz voll werden) redispergiert (im Sinne eines Kieselsäure/Luft-Aerosols). Dabei soll die Stromaufnahme der Mühle den Wert von 3 Ampere nicht überschreiten. Bei diesem Vorgang handelte es sich weniger um eine klassische Vermahlung, als um ein definiertes Auflockern der Kieselsäurestruktur (von beispielsweise luftstrahlvermahlenen Kieselsäuren), da der Energieeintrag hier wesentlich schwächer war als bei einer Strahlvermahlung.

5 g des so erhaltenen Materials werden in den 250 ml-Meßzylinder des Stampfvolumeters (STAV 2003 von Engelsmann) auf 0,1 g genau eingewogen. In Anlehnung an DIN ISO 787-11 wird nach 1250maligem Aufstampfen das resultierende Volumen der Kieselsäure in ml an der Skala abgelesen.

Bestimmung des Glühverlusts und des $SiO_2$-Gehalts

1 g Kieselsäure-Ausgangsprobenmaterial wurde genau in einen tarierten Platintiegel eingewogen ($m_{sp}$) und 2 h auf 1000°C erhitzt. Nach Abkühlen im Exsikkator in Gegenwart von $P_2O_5$ wurde der Tiegel erneut gewogen. Das Gewicht nach Glühverlust ($m_{GV}$) wurde berechnet.

Der Glührückstand wurde mit entionisiertem Wasser befeuchtet und mit 2 ml $HClO_4$ (70% p.a.) und 25 ml HF (40% p.a.) versetzt. Die Probe wurde langsam bis zur Beobachtung starker Rauchentwicklung erhitzt. Nach Zugabe von weiteren 2 ml HF wurde die Probe erneut eingedampft. Der Rückstand wurde 1 h auf 1000°C erhitzt. Nach Abkühlen im Exsikkator in Gegenwart von $P_2O_5$ wurde der Rückstand gewogen ($m_{HF}$).
Der $SiO_2$-Gehalt wurde durch die folgende Gleichung gegeben:

$$LOI\ in\,[\%] = \frac{m_{GV} - m_{sp}}{m_{sp}} \times 100$$

$$SiO_2\text{-}Gehalt\,in\,[\%] = \frac{m_{GV} - m_{HF}}{m_{GV}} \times 100$$

$m_{sp}$ = Gewicht der Ausgangsprobe [g],
$m_{GV}$ = Gewicht der Probe nach Glühverlust [g],
$m_{HF}$ = Gewicht der Probe nach Behandlung mit HF [g].

Bestimmung des $Na_2O$-Gehalts

Der $Na_2O$-Gehalt wurde mit einem Flammenatomadsorptionsspektrometer bestimmt.
3,0 g der Ausgangsprobe wurde in einem Platinbecher genau abgewogen. Die Probe wurde mit entionisiertem Wasser befeuchtet und mit 5 ml Schwefelsäure (1:1) und 25 ml Fluorwasserstoffsäure versetzt. Die Probe wurde langsam bis zur Beobachtung starker Rauchentwicklung erhitzt. Im Fall der Beobachtung von verbliebenem organischem Material in Form eines dunklen Rückstands wurde die Probe mit $H_2O_2$ nachbehandelt. Der Rückstand wurde dann mit entionisiertem Wasser verdünnt und gelöst. Die Lösung wurde in einem graduierten Probenrohr auf 50 ml aufgefüllt.

0,2 ml dieser Lösung wurden in ein zweites Rohr überführt, mit 2,5 ml CsCl-Lösung (w(Cs = 10%) versetzt und mit entionisiertem Wasser auf 50 ml aufgefüllt.

Zur Kalibrierung wurden weiteren Lösungen mit einem Na-Gehalt von 0,1 mg/l, 0,2 mg/l und 0,3 mg/l und eine

Blindlösung hergestellt.

Alle Lösungen wurden mittels Flammenatomadsorptionsspektroskopie bei einer Wellenlänge von 589 nm gemessen.

Das Ergebnis dieser Messung war der Na-Gehalt in der Meßlösung. Der $Na_2O$-Gehalt war durch die folgende Gleichung gegeben:

$$Na_2O\text{-}Gehalt \quad in \quad [\%] = \frac{c_{Na} \times V_{sp} \times D_F \times 1{,}348}{\left(W - \frac{LOI}{100} \times W\right) \times 1000} \times 100$$

$CN_a$ = in der Meßlösung gemessener Na-Gehalt [mg/l],
$V_{sp}$ = Volumen [l] = 0,05,
$D_F$ = Verdünnungsfaktor = 250,
W = gewogene Probe [g],
LOI = Glühverlust [%],
1,348 = stöchiometrischer Faktor (Na->$Na_2O$).

Bestimmung der Leitfähigkeit

Gemäß DIN EN ISO 787-14 wurde die Methode zur Bestimmung des spezifischen elektrischen Widerstands von wäßrigen Kieselsäuresuspensionen bzw. Extrakten verwendet.

Mit entsprechenden Mengen an Probe und destilliertem Wasser wurde eine Suspension mit einem Gehalt von 5% (m/m) hergestellt. Dann wurde die Temperatur der Suspension in einem Thermostaten auf 21 °C eingestellt und die elektrische Leitfähigkeit unter Verwendung eines Leitfähigkeitsmeßgeräts (Leitfähigkeitsmeßgerät Metrohm 660 oder LF 530, WTW) und einer Leitfähigkeitszelle (Metrohm, Modell 6.0908.110) gemessen.

15 g der untersuchten Probe und 285 g entionisiertes Wasser wurden mit Hilfe einer Präzisionswaage in ein vortariertes Becherglas eingewogen. Die mit einem Uhrglas abgedeckte Suspension in dem Becherglas wurde mit einem Magnetrührer mit Rührstab, 5 Minuten (± 10 s) bei Raumtemperatur gründlich gerührt. Ungefähr 40 ml der Suspension wurden in ein 50-ml-Becherglas überführt und in einem Thermostaten auf 21 ± 0,5°C einstellen gelassen. Die Referenztemperatur von 21 °C diente auch zur Einstellung des Leitfähigkeitsmeßgeräts.

Weitere 40 ml der Suspension wurden in ein zweites 50-ml-Bechergals gegeben, und die Leitfähigkeitszelle durch wiederholtes Eintauchen in diese Suspension vorgespült. Dann wurde die Leitfähigkeitszelle in die auf 21 ± 0,5°C eingestellte Meßsuspension getaucht. Der vom Leitfähigkeitsmeßgerät abgelesene Meßwert entspricht der elektrischen Leitfähigkeit der Suspension bei 21 °C.

Das Ergebnis der Bestimmung war die elektrische Leitfähigkeit in µS/cm einer 5%igen Suspension (m/m) unter Bezugnahme auf eine Temperatur von 21 °C. Bei einer Leitfähigkeit >= 200 µS/ cm wurde das Ergebnis auf 10 µS/cm gerundet. Bei einer Leitfähigkeit < 200 µS/ cm wurde auf 1 µS/ cm gerundet.

Bestimmung der Silanolgruppendichte

Zunächst wurde die Feuchte der Kieselsäureprobe gemäß der "Bestimmung des Trocknungsverlusts" ermittelt. Danach wurden 2 - 4 g der Probe (auf 1 mg genau) in eine druckdichte Glasapparatur (Glaskolben mit Tropftrichter) mit angeschlossener Druckmessung überführt. Dort wurde sie 1 h bei 120° im Vakuum (< 1 hPa) getrocknet. Bei Raumtemperatur wurden dann aus dem Tropftrichter ungefähr 40 ml einer entgasten 2%igen Lösung von $LiAlH_4$ in Diglyme zugetropft. Gegebenenfalls wurde weitere Lösung zugetropft, bis keine weitere Druckzunahme zu beobachten war. Die Druckzunahme durch den bei der Reaktion des $LiAlH_4$ mit den Silanolgruppen der Kieselsäure entstehenden Wasserstoff wurde über die Druckmessung (bei durch vor der Messung erfolgter Kalibrierung der Apparatur bekanntem Volumen) auf ≤ 1 hPa genau bestimmt. Aus der Druckzunahme konnte über die Allgemeine Gasgleichung auf die Silanolgruppenkonzentration der Kieselsäure zurückgerechnet werden, wobei der Feuchtigkeitsgehalt der Kieselsäure zu berücksichtigen war. Der Einfluß des Dampfdrucks des Lösungsmittels ist dabei entsprechend zu korrigieren. Die Silanolgruppendichte wurde folgendermaßen berechnet:

$$Silanol\,gruppendichte = \frac{Silanol\,gruppenkonzentration}{BET\text{-}Oberfläche}$$

Bestimmung der Sears-Zahl

Durch die Titration von Kieselsäure mit Kaliumhydroxidlösung im Bereich von pH 6 bis pH 9 läßt sich die modifizierte Sears-Zahl (im folgenden Sears-Zahl $V_2$) als Maß für die Zahl freier Silanolgruppen bestimmen. Der Bestimmungsmethode lagen die folgenden chemischen Reaktionen zugrunde, wobei

$$\equiv SiOH + NaCl \Rightarrow \equiv SiONa + HCl$$

$$HCl + KOH \Rightarrow KCl + H_2O.$$

Methode

10,00 g einer pulverförmigen, kugelförmigen oder granulären Kieselsäure mit 5 ± 1 % Feuchte wurden 60 Sekunden in der IKA-Universalmühle M 20 (550 W; 20 000 U/min) zerkleinert. Gegebenenfalls mußte der Feuchtigkeitsgehalt durch Trocknen bei 105°C im Trockenschrank oder gleichmäßiges Befeuchten eingestellt und der Zerkleinerungsvorgang wiederholt werden. 2,50 g der so behandelten Kieselsäure wurden bei Raumtemperatur in ein 250-ml-Titriergefäß eingewogen und mit 60.0 ml Methanol p. A. versetzt. Nach vollständiger Benetzung der Probe wurden 40,0 ml entionisiertes Wasser zugegeben, wonach mittels Ultra Turrax T 25 (Rührwelle KV-18G, 18 mm Durchmesser) 30 Sekunden lang bei einer Drehzahl von 18 000 U/min dispergiert wurde. Mit 100 ml entionisiertem Wasser werden die am Gefäßrand und Rührer anhaftenden Probepartikel in die Suspension gespült, wonach die Mischung in einem thermostatisierten Wasserbad auf 25°C temperiert wurde.

Das pH-Meßgerät (Knick, Typ: 766 pH-Meter Calimatic mit Temperaturfühler) und die pH-Elektrode (Schott, Einstabmeßkette N7680) wurden unter Verwendung von Pufferlösungen (pH 7,00 und 9,00) bei Raumtemperatur kalibriert. Mit dem pH-Meter wird zunächst der AusgangspH-Wert der Suspension bei 25°C gemessen, danach wird je nach Ergebnis mit Kaliumhydroxid-Lösung (0,1 mol/l) bzw. Salzsäurelösung (0,1 mol/l) der pH-Wert auf 6,00 eingestellt. Es wurde eine dynamische Titrationsmethode mit den folgenden Randbedingungen gewählt: inkrementelles Titrationsvolumen $V_{min}$ = 0,05 ml bis $V_{max}$ = 1,0 ml; Wartezeit zwischen den Volumenzugaben $t_{min}$ = 2,0 s bis $t_{max}$ = 20,0 s. Der Verbrauch an KOH- bzw. HCl-Lösung in ml bis pH 6,00 entsprach $V_1$'. Danach wurden 20,0 ml Natriumchloridlösung (250,00 g NaCl p. A., mit entionisiertem Wasser auf 1 l aufgefüllt) zugegeben. Dann wurde mit 0,1 mol/l KOH bis zu einem pH-Wert von 9,00 titriert. Der Verbrauch an KOH-Lösung in ml bis pH 9,00 entsprach $V_2$'.

Anschließend wurden die Volumina $V_1$' bzw. $V_2$' zunächst auf die theoretische Einwaage von 1 g normiert und mit 5 multipliziert, was $V_1$ und die Sears-Zahl $V_2$ in den Einheiten ml/(5 g) ergab.

IR-Bestimmung

Mittels IR-Spektroskopie können die unterschiedlichen Arten von SiOH-Gruppen (isoliert, verbrückt, + $H_2O$) ermittelt werden. Zur Bestimmung der Intensitäten der verschiedenen Silanolgruppen werden die Kieselsäuren als Pulverschichten vermessen. Die Extinktionswerte der unterschiedlichen Silanolgruppen werden durch den Extinktionswert der SiO-Kombinationsschwingungsbande bei 1870 $cm^{-1}$ dividiert (normiert).

Die IR-spektroskopische Bestimmung erfolgt mit einem FR-IR-Spektrometer IFS 85 von Bruker. Für die Messung werden ein NaCl-Monokristallfenster (rund d = 25 mm, h = 5 mm) von K. Korth, Kiel, ein 0,5-mm-Distanzhalter aus Teflon und eine Halterung für die Fenster verwendet. Der Distanzhalter wurde auf ein sauberes und poliertes NaCl-Monokristallfenster gelegt. Das Probenmaterial wurde zwischen dem Distanzhalter aufgestäubt und mit einem weiteren sauberen und polierten NaCl-Monokristallfenster abgedeckt, wobei keine Luftbläschen eingeschlossen sein durften. Die beiden NaCl-Monokristallfenster mit der Pulverschicht wurden in die Probenhalterung eingespannt. Die Probenhalterung wurde in den IR-Strahlengang gebracht und der Probenraum geschlossen. Der Probenraum wurde vor der Messung mit von Wasserdampf und Kohlendioxid gereinigter Luft gespült. Im Justiermodus wurde ein "Align" durchgeführt und die

Messung gestartet.

Die Messung wurde mit folgenden Parametern durchgeführt:

| | |
|---|---|
| Auflösung: | 2 $cm^{-1}$ |

(fortgesetzt)

| | |
|---|---|
| Scannergeschwindigkeit: | 6; 10,51 Hz |
| Meßintervall: | 4500 $cm^{-1}$ bis 100 $cm^{-1}$ |
| Apodizierungsfunktion: | Triangular |
| Anzahl der Scans: | 128. |

Das Spektrum wurde im Wellenzahlenbereich von 4000 bis 1400 $cm^{-1}$ in kontinuierlichen Wellenzahlen ausgedruckt.

Das Extinktionsverhältnis $SiOH_{isoliert}$ wurde folgendermaßen ermittelt (Figur 6):

Zunächst wurden zwei Basislinien festgelegt. Dazu wurden zwei Tangenten an die Absorptionskurve angelegt. Die erste Tangente (1. Basislinie) berührt die Absorptionskurve zum einen im Bereich von 4000 $cm^{-1}$ bis 3800 $cm^{-1}$ sowie zum anderen im Bereich von 3000 $cm^{-1}$ bis 2100 $cm^{-1}$. Dabei ist darauf zu achten, das die Tangente die Absorptionskurve weder im Bereich von 4000 $cm^{-1}$ bis 3800 $cm^{-1}$ noch im Bereich von 3000 $cm^{-1}$ bis 2100 $cm^{-1}$ schneidet. Die zweite Tangente (2. Basislinie) berührt die Absorptionskurve zum einen im Bereich von 2200 $cm^{-1}$ bis 2000 $cm^{-1}$ sowie zum anderen im Bereich von 1850 $cm^{-1}$ bis 1650 $cm^{-1}$. Dabei ist darauf zu achten, das die Tangente die Absorptionskurve weder im Bereich von 2200 $cm^{-1}$ bis 2000 $cm^{-1}$ noch im Bereich von 1850 $cm^{-1}$ bis 1650 $cm^{-1}$ schneidet.

Nach Festlegung der Basislinien wurde vom Maximum der relevanten Banden (3750 und 1870 $cm^{-1}$) das Lot auf die jeweilige Basislinie gefällt, und die jeweiligen Höhen vom Maximum bis zur Basislinie in mm wurden ausgemessen. Es wurde folgender Quotient gebildet:

$$\text{Extinktionsverhältnis } (SiOH_{\text{isoliert}}) = \frac{\text{Höhe vom Maximum zur Basislinie bei } 3750\ cm^{-1}}{\text{Höhe vom Maximum zur Basislinie bei } 1870\ cm^{-1}}$$

Von jeder Probe wurden sechs IR-Spektren aufgenommen, wobei jeweils mit neuem Probenmaterial gemessen wird. Jedes IR-Spektrum wurde nach der zuvor beschriebenen Prozedur fünfmal ausgewertet. Das Extinktionsverhältnis ($SiOH_{isoliert}$) wurde schließlich als Mittelwert aller Auswertungen angegeben.

Bestimmung des pH-Werts

Die Bestimmung des pH-Wertes der Kieselsäure erfolgt als 5%ige wäßrige Suspension bei Raumtemperatur in Anlehnung an DIN EN ISO 787-9. Gegenüber den Vorgaben dieser Norm wurden die Einwaagen verändert (5,00 g Kieselsäure auf 100 ml entionisiertes Wasser).

Bestimmung der Partikelgrößenverteilung mittels Laserbeugung

Die Bestimmung der Partikelverteilung erfolgt nach dem Prinzip der Laserbeugung auf einem Laserdiffraktometer (Horiba, LA-920).

Zunächst wurde die Kieselsäureprobe in 100 ml Wasser ohne Zusatz von Dispergieradditiven in einem 150-ml-Becherglas (Durchmesser: 6 cm) so dispergiert, daß sich eine Dispersion mit einem Gewichtsanteil von 1 Gew.-% $SiO_2$ ergab. Diese Dispersion wurde danach mit einem Ultraschallfinger (Dr. Hielscher UP400s, Sonotrode H7) über einen Zeitraum von 5 Minuten intensiv (300 W, nicht gepulst) dispergiert. Dafür wurde der Ultraschallfinger so angebracht, daß dessen unteres Ende bis ungefähr 1 cm über dem Boden des Becherglases eintaucht. Unmittelbar im Anschluß an die Dispergierung wurde von einer Teilprobe der mit Ultraschall behandelten Dispersion mit dem Laserdiffraktometer (Horiba LA-920) die Partikelgrößenverteilung bestimmt. Für die Auswertung mit der mit dem Horiba LA-920 mitgelieferten Standardsoftware wurde ein Brechungsindex von 1,09 gewählt.

Alle Messungen erfolgen bei Raumtemperatur. Die Partikelgrößenverteilung sowie die relevanten Größen, wie beispielsweise die Partikelgröße $d_{50}$ und $d_{90}$, werden vom Gerät automatisch berechnet und graphisch dargestellt. Es sind die Hinweise in der Bedienungsanleitung zu beachten.

Beispiel 1

Die im Handel erhältliche Fällungskieselsäure Sipernat 160 von Evonik Degussa GmbH, physikalisch-chemische Daten siehe Tabelle 1, wurde auf einer mit Wasserdampf betriebenen Fließbettgegenstrahlmühle bei Überdruck ultrafein vermahlen. Details des Mahlsystems (Mühle) und der verwendeten Vermahlungsmethode wurden in der obigen Beschreibung angegeben.

Zur Vorbereitung der eigentlichen Vermahlung mit überhitztem Wasserdampf wurde eine Fließbettgegenstrahlmühle gemäß Figur 1 mit einem integrierten dynamischen Windsichter gemäß den Figuren 2 und 3 zunächst über die zwei Heizdüsen 5a (wovon in Figur 1 nur eine dargestellt ist), welche mit 10 bar und 160°C heißer Druckluft beaufschlagt wurden, bis zu einer Mühlenaustrittstemperatur von ungefähr 105°C aufgeheizt.

Der Mühle war zur Abscheidung des Mahlguts eine Filteranlage nachgeschaltet (nicht in Figur 1 gezeigt), deren Filtergehäuse im unteren Drittel indirekt über angebrachte Heizschlangen mittels 6 bar gesättigtem Wasserdampf ebenfalls zur Verhinderung von Kondensation beheizt wurde. Alle Apparateoberflächen im Bereich der Mühle, des Abscheidefilters sowie der Versorgungsleitungen für Dampf und heiße Druckluft waren besonders isoliert.

Nach Erreichen der gewünschten Aufheiztemperatur wurde die Versorgung der Heizdüsen mit heißer Druckluft abgeschaltet und die Beaufschlagung der drei Mahldüsen mit überhitztem Wasserdampf gestartet.

Zum Schutz des im Abscheidefilter eingesetzten Filtermittels sowie zur Einstellung eines bestimmten Restwassergehaltes des Mahlguts (siehe Tabelle 3) wurde Wasser in der Startphase und während der Vermahlung in den Mahlraum der Mühle über eine mit Druckluft betriebene Zweistoffdüse in Abhängigkeit von der Mühlenaustrittstemperatur eingedüst. Details der Mahlkonfiguration werden in Tabelle 2 angegeben.

Mit der Produktaufgabe wurde begonnen, wenn die obigen Betriebsparameter konstant waren. Die Regelung der Aufgabemenge erfolgte in Abhängigkeit vom sich einstellenden Sichterstrom. Der Sichterstrom regelt die Aufgabemenge derart, daß ungefähr 70% des Nennstroms nicht überschritten werden konnten.

Als Eintragsorgan (4) fungierte dabei ein drehzahlgeregeltes Zellenrad, welches das Aufgabegut aus einem Vorlagebehälter über eine als barometrischer Abschluß dienende Taktschleuse in die unter Überdruck stehende Mahlkammer dosierte.

Die Zerkleinerung des Grobguts erfolgte in den expandierenden Dampfstrahlen (Mahlgas). Gemeinsam mit dem entspannten Mahlgas steigen die Produktpartikel im Zentrum des Mühlenbehälters zum Sichtrad auf. Je nach eingestellter Sichterdrehzahl und Mahldampfmenge (siehe Tabelle 2) gelangen die Partikel, die eine ausreichende Feinheit aufweisen mit dem Mahldampf in den Feingutaustritt und von dort in das nachgeschaltete Abscheidesystem, während zu grobe Partikel zurück in die Mahlzone gelangen und einer nochmaligen Zerkleinerung unterworfen wurden. Der Austrag des abgeschiedenen Feinguts aus dem Abscheidefilter in die nachfolgende Silierung und Abpackung geschieht mittels Zellenradschleuse.

Der an den Mahldüsen herrschende Mahldruck des Mahlgases bzw. die daraus resultierenden Mahlgasmenge in Verbindung mit der Drehzahl des dynamischen Schaufelradsichters bestimmen die Feinheit der Kornverteilungsfunktion sowie die Oberkorngrenze.

Das Material wurde auf die in Tabelle 3 durch den $d_{50}$- und den $d_{90}$-Wert definierte Korngröße gemahlen.

Beispiele 2a und 2b

In Beispiel 2a wurde die im Handel erhältliche Fällungskieselsäure Sipernat 22 von Evonik Degussa GmbH, physikalisch-chemische Daten siehe Tabelle 1, auf einer mit Wasserdampf betriebenen Fließbettgegenstrahlmühle bei einem Überdruck von etwa 38 bar ultrafein vermahlen und in Beispiel 2b die im Handel erhältliche Fällungskieselsäure YH 350 von DWS, Nanping, China, physikalisch-chemische Daten siehe Tabelle 1. Details des Mahlsystems (Mühle) und der verwendeten Vermahlungsmethode wurden in der obigen Beschreibung angegeben.

Zur Vorbereitung der eigentlichen Vermahlung mit überhitztem Wasserdampf wurde eine Fließbettgegenstrahlmühle gemäß Figur 1 mit einem integrierten dynamischen Windsichter gemäß den Figuren 2 und 3 zunächst über die zwei Heizdüsen 5a (wovon in Figur 1 nur eine dargestellt ist), welche mit 10 bar und 160°C heißer Druckluft beaufschlagt wurden, bis zu einer Mühlenaustrittstemperatur von ungefähr 105°C aufgeheizt.

Der Mühle war zur Abscheidung des Mahlguts eine Filteranlage nachgeschaltet (nicht in Fig. 1 gezeigt), deren Filtergehäuse im unteren Drittel indirekt über angebrachte Heizschlangen mittels 6 bar gesättigtem Wasserdampf ebenfalls zur Verhinderung von Kondensation beheizt wurde. Alle Apparateoberflächen im Bereich der Mühle, des Abscheidefilters sowie der Versorgungsleitungen für Dampf und heiße Druckluft waren besonders isoliert.

Nach Erreichen der gewünschten Aufheiztemperatur wurde die Versorgung der Heizdüsen mit heißer Druckluft abgeschaltet und die Beaufschlagung der drei Mahldüsen mit überhitztem Wasserdampf gestartet.

Im Gegensatz zu Beispiel 1 wurden während des Mahlens in den Beispielen 2 und 3 eine Lösung von $MgSO_4*7H_2O$ (20 Gew.-%) und $NH_3$ zugegeben.

Zum Schutz des im Abscheidefilter eingesetzten Filtermittels sowie zur Einstellung eines bestimmten Restwassergehaltes des Mahlguts (siehe Tabelle 3) wurde Wasser in der Startphase und während der Vermahlung in den Mahlraum der Mühle über eine mit Druckluft betriebene Zweistoffdüse in Abhängigkeit von der Mühlenaustrittstemperatur eingedüst.

Die Mühlenkonfigurationen sind in Tabelle 2 angegeben.

Mit der Produktaufgabe wurde begonnen, wenn die obigen Betriebsparameter konstant waren. Die Regelung der Aufgabemenge erfolgte in Abhängigkeit vom sich einstellenden Sichterstrom. Der Sichterstrom regelt die Aufgabemenge derart, daß ungefähr 70% des Nennstroms nicht überschritten werden konnten.

Als Eintragsorgan (4) fungierte dabei ein drehzahlgeregeltes Zellenrad, welches das Aufgabegut aus einem Vorlagebehälter über eine als barometrischer Abschluß dienende Taktschleuse in die unter Überdruck stehende Mahlkammer dosierte.

Die Zerkleinerung des Grobguts erfolgte in den expandierenden Dampfstrahlen (Mahlgas). Gemeinsam mit dem entspannten Mahlgas steigen die Produktpartikel im Zentrum des Mühlenbehälters zum Sichtrad auf. Je nach eingestellter Sichterdrehzahl und Mahldampfmenge gelangen die Partikel, die eine ausreichende Feinheit aufweisen mit dem Mahldampf in den Feingutaustritt und von dort in das nachgeschaltete Abscheidesystem, während zu grobe Partikel zurück in die Mahlzone gelangen und einer nochmaligen Zerkleinerung unterworfen wurden. Der Austrag des abgeschiedenen Feinguts aus dem Abscheidefilter in die nachfolgende Silierung und Abpackung geschieht mittels Zellenradschleuse.

Der an den Mahldüsen herrschende Mahldruck des Mahlgases bzw. die daraus resultierenden Mahlgasmenge in Verbindung mit der Drehzahl des dynamischen Schaufelradsichters bestimmen die Feinheit der Kornverteilungsfunktion sowie die Oberkorngrenze.

Das Material wurde auf die in Tabelle 3 durch den $d_{50}$- und den $d_{90}$-Wert definierte Korngröße gemahlen.

Tabelle 1:

| | | Sipernat 160 | Sipernat 22 | YH 350 |
|---|---|---|---|---|
| BET | $m^2/g$ | 183 | 189 | 277 |
| pH | - | 5,6 | 6,5 | 7,0 |
| Trocknungsverlust | Gew.-% | 2,9 | 5,9 | 5,1 |
| Glühnverlust | Gew.-% | 3,2 | 3,8 | 3,8 |
| Sears-Zahl | ml/(5g) | 11,8 | 24,1 | N.B. |
| DBP | ml/100g | 276 | 272 | 313 |

Tabelle 2:

| | | Beispiel 1 | Beispiel 2a | Beispiel 2b |
|---|---|---|---|---|
| Mahldüsendurchmesser | mm | 3,2 | 3,2 | 3,2 |
| Düsentyp | | Laval | Laval | Laval |
| Düsenzahl | Stück | 3 | 3 | 3 |
| Mühleninnendruck | bar(abs.) | 1,144 | 1,136 | 1,147 |
| Eintrittsdruck des Mahlmediums | bar (abs.) | 37,0 | 37,2 | 37,0 |
| Eintrittstemperatur des Mahlmediums | °C | 348 | 351 | 354 |
| Mühlenaustrittstemperatur des Mahlmediums | °C | 124 | 123 | 113-121 |
| Sichterdrehzahl | $min^{-1}$ | 4500 | 4000 | 4500 |
| Sichtermotorstrom | A% | 62 | 62 | 61-62 |
| Austrittssutzendurchmesser (Tauchrohrdurchmesser) | mm | 140 | 140 | 140 |
| Kieselsäure | kg/h | 56 | 103 | 50 |
| $MgSO_4$*7H20 (20%ige Lösung) | kg/h | - | 1,69 | 2,58 |
| $NH_3$ | l/h | - | 60 | 80 |

Tabelle 3:

| | | Beispiel 1 | Beispiel 2a | Beispiel 2b | Vergleichsbeispiel 1 | Vergleichsbeispiel 2 |
|---|---|---|---|---|---|---|
| BET | $m^2/g$ | 179 | 187 | 267 | 180 | 142 |
| pH | - | 6,4 | 7,7 | 7,5 | 6,4 | 6,0 |
| Trocknungsverlust | Gew.-% | 2,8 | 3,8 | 3,4 | 2,8 | 0,5 |
| Glühverlust | Gew.-% | 3,0 | 5,2 | 4,4 | 3,0 | 0,9 |
| Extinktionsverhältnis $SiOH_{isoliert}$ | | 0,43 | 0,33 | 0,6 | n.b. | 3,17 |
| Silanolgruppendichte | $SiOH/nm^2$ | 3,800 | 3,23 | 3,46 | 3,45 | 1,988 |
| Modifizierte Stampfdichte | g/l | 26 | 30 | 23 | - | 21 |
| $d_{90}$-Wert der volumenbezogenen Partikelverteilung | µm | 1,07 | 4,843 | 4,743 | 12,4[1)] | 5,87 |
| $d_{50}$-Wert der volumenbezogenen Partikelverteilung | µm | 0,385 | 0,592 | 0,592 | 5,3 | n.b. |

1) d95-Wert, gemessen mittels Coulter LS 230, 7' Ultraschall mit 19-mm-Sonotrode von Vibracell, 4 cm Eintauchung, Amplitude 80%, 0,5 g Kieselsäure / 50 ml

Beispiel 3

Die Fällungskieselsäuren gemäß den Beispielen 1, 2a und 2b wurden zur Herstellung von erfindungsgemäßen thixotropen UPE-Formulierungen verwendet. Die Vergleichsbeispiele umfassen die beiden anderen Fällungskieselsäureprodukte Sipernat® 22LS (Vergleichsbeispiel 1) von Evonik Degussa® GmbH und eine Kieselsäure gemäß Beispiel 2 der DE102007004757 (Vergleichsbeispiel 2). Die Eigenschaften der verwendeten Fällungskieselsäure wurden in Tabelle 3 zusammengestellt.

Als Basisharz diente in dem Beispiel Ashland Aropol S570, ein niedermolekulares UPE-Harz auf Basis von Isophthalsäure und Neopentylglykol (ISO NPG) von Ashland Specialy Chemicals Co., Columbus, OH, USA. Das Polyesterpolymer wurde in 27,9% Styrol, einem reaktiven Verdünnungsmittel, gelöst. In dem Harz wurden Kieselsäureproben mit einer 50-Millimeter-Schaufel vom Cowles-Typ mit einem Dispermat bei 5000 U/min 10 Minuten dispergiert. Die gemahlenen Kieselsäureproben wurden in einem Anteil von 4,0 Gew.-% zudosiert. Außerdem wurde Cobaltpromotor, 12% Cobalt Catalyst 510 von OMG®, Westlake, OH, USA, in einer Menge von 0,15 Gew.-% verwendet. Das Cobalt wurde mit einer 50-Millimeter-Schaufel vom Cowles-Typ mit einem Dispermat bei 1000 U/min 1,0 Minuten dispergiert.

Die dispergierten Proben wurden mit einem Mahlfeinheitsmeßgerät geprüft, um die größte Grobagglomeratgröße der gemahlenen Kieselsäureteilchen zu bestimmen. Eine Harzprobe wurde am Kopf jedes Kanals am Mahlfeinheitsmeßgerät mit einer Skala von 0 bis 50 Mikrometer plaziert, und ein flacher Metallstab wurde zum Abziehen der Probe über die Länge der Mahlfeinheitsskala verwendet. Die visuelle Ablesung wurde aufgezeichnet, wo in jedem Kanal eine Linie von Partikeln sichtbar wurde. Die Mahlfeinheitswerte, die sowohl als Mikrometer als auch als Hegman-Feinheit genommen wurden, sind in Tabelle 4 zusammengestellt. Alle drei fein gemahlenen Beispiele zeigten ähnliche Mahlfeinheitsablesungen, die wesentlich besser waren als das Vergleichsbeispiel.

Tabelle 4: Grobagglomeratgröße (Hegman-Feinheit)

| Beispiel | Grobagglomeratgröße (µm) | Ablesung der Hegman-Feinheit |
|---|---|---|
| 1 | 10 | 7,0 |
| 2a | 12 | 6,9 |
| 2b | 10 | 7,0 |
| Vergleichsbeispiel 1 | 47 | 4,3 |

Zum Vergleich der rheologischen Eigenschaften der thixotropen UPE-Formulierungen wurden ein DV II+ Pro-Viscometer von Brookfield und je nach der Viskosität der Probe die RV-Spindel Nr. 3 oder Nr. 4 verwendet. Viskositätsablesungen wurden bei 2 und 20 U/min aufgezeichnet. Der Thixotropieindex (TI) wurde als das Verhältnis der Viskosität bei 2 U/min zur Viskosität bei 20 U/min berechnet. Die Anfangswerte für Viskosität und Thixotropie sind in Tabelle 5 aufgeführt.

Tabelle 5: Anfängliche Brookfield-Viskosität und anfänglicher Thixotropieindex

| Kieselsäure | Viskosität (cp) bei 2 U/min | Viskosität (cp) bei 20 U/min | Thixotropieindex |
|---|---|---|---|
| 1 | 20700 | 5100 | 4,06 |
| 2a | 17500 | 4370 | 4,00 |
| 2b | 28800 | 6150 | 4,68 |
| Vergleichsbeispiel 1 | 10200 | 3230 | 3,16 |

Der Verdickungseffekt (2 U/min) der mit der Substanz aus Beispiel 1, 2a, und 2b hergestellten Formulierung war 2,8-, 1,7- bzw. 2,0mal größer als derjenige des Vergleichsbeispiels. Die Thixotropieindices der aus der in Beispiel 1, 2a, und 2b hergestellten Kieselsäure waren ebenfalls alle demjenigen des Vergleichsbeispiels erheblich überlegen. Am besten war die mit der Kieselsäure aus Beispiel 2 hergestellte Formulierung, die einen TI bereitstellte, der etwa 1,5mal höher war als derjenige des Vergleichsbeispiels.

Im Lichte der obigen Lehren sind zahlreiche Modifikationen und Variationen der vorliegenden Erfindung möglich.

## Patentansprüche

1. Fällungskieselsäure mit den folgenden Eigenschaften:

   - einem $d_{50}$-Wert von 150 bis 2000 nm;
   - einem $d_{90}$-Wert von 500 bis 7000 nm;
   - einer Silanolgruppendichte von 2,5 bis 8 OH/$nm^2$; und
   - einer modifizierten Stampfdichte kleiner gleich 70 g/l.

2. Fällungskieselsäure nach Anspruch 1, **dadurch gekennzeichnet, daß** eine Oberfläche der Fällungskieselsäure mit mindestens einem zweiwertigen Kation aus der Gruppe bestehend aus $Mg^{2+}$, $Ca^{2+}$, $Ba^{2+}$, $Sr^{2+}$, $Zn^{2+}$ und Mischungen davon dotiert ist.

3. Fällungskieselsäure nach Anspruch 1, **dadurch gekennzeichnet, daß** die BET-Oberfläche der Fällungskieselsäure 100 bis 350 $m^2$/g beträgt.

4. Fällungskieselsäure nach Anspruch 1, **dadurch gekennzeichnet, daß** der Trocknungsverlust 1,5 bis 8 Gew.-% beträgt und/oder der Glühverlust 1,5 bis 9 Gew.-% beträgt.

5. Fällungskieselsäure nach Anspruch 1, **dadurch gekennzeichnet, daß** die Silanolgruppendichte 3,1 bis 5 OH/$nm^2$ beträgt.

6. Fällungskieselsäure nach Anspruch 1, **dadurch gekennzeichnet, daß** der pH-Wert 4 bis 9 beträgt.

7. Fällungskieselsäure nach Anspruch 1, **dadurch gekennzeichnet, daß** der $SiOH_{isoliert}$-Wert unter 0,8 liegt.

8. Verfahren zur Herstellung einer Fällungskieselsäure, bei dem man:

   eine Fällungskieselsäure mit den folgenden Eigenschaften:
   einer Sears-Zahl von 10 bis 30 ml/(5g),
   einer BET-Oberfläche von 100 bis 350 $m^2$/g,
   einem Trocknungsverlust von 2 bis 8 Gew.-%,
   einem Glühverlust von 2 bis 9 Gew.-%,

einem pH-Wert von 4 bis 9 und
einem DBP-Wert von 230 bis 400 g/100g,
vermahlt und gleichzeitig sichtet, wobei man gemahlene Kieselsäure erhält;
wobei das Vermahlen und gleichzeitige Sichten unter Verwendung einer Mahlapparatur durchgeführt werden;
**dadurch gekennzeichnet, daß** eine Mühle der Mahlapparatur in einer Mahlphase mit einem Betriebsmittel aus der Gruppe bestehend aus einem Gas, einem Dampf, Wasserdampf, einem Wasserdampf enthaltenden Gas und Mischungen davon betrieben wird; und
daß ein Mahlraum in einer Aufheizphase, d. h. vor dem eigentlichen Betrieb mit dem Betriebsmittel, derart aufgeheizt wird, daß die Temperatur im Mahlraum und/oder am Mühlenausgang höher liegt als der Taupunkt des Betriebsmittels; und
daß die gemahlene Kieselsäure bis zu einem $d_{50}$-Wert von 150 - 2000 nm und einem $d_{90}$-Wert von 500 - 7000 nm gesichtet wird.

**9.** Verfahren nach Anspruch 8, **dadurch gekennzeichnet, daß** man das Vermahlen unter Verwendung einer Strahlmühle durchführt.

**10.** Verfahren nach Anspruch 9, **dadurch gekennzeichnet, daß** es sich bei der Strahlmühle um eine Fließbettgegenstrahlmühle handelt, die mit Wasserdampf als Betriebsmedium betrieben wird.

**11.** Verfahren nach Anspruch 9, **dadurch gekennzeichnet, daß** man die Fällungskieselsäure und mindestens ein mehrwertiges Kation und/oder $NH_3$ in Kontakt bringt.

**12.** Verfahren nach Anspruch 11, **dadurch gekennzeichnet, daß** es sich bei dem Kation um ein zweiwertiges oder dreiwertiges Kation handelt.

**13.** Flüssige Zusammensetzung, enthaltend:

mindestens eine Fällungskieselsäure nach Anspruch 1.

**14.** Flüssige Zusammensetzung nach Anspruch 13, die eine gehärtete oder ungehärtete ungesättigte Polyesterharzzusammensetzung enthält.

**15.** Flüssige Zusammensetzung nach Anspruch 13, bei der es sich um eine gefärbte Zusammensetzung handelt.

**16.** Flüssige Zusammensetzung nach Anspruch 13, die 0,1 bis 15 Gew.-% der Fällungskieselsäure enthält.

**17.** Verfahren zur Herstellung einer flüssigen Zusammensetzung, bei dem man:

mindestens eine Fällungskieselsäure nach Anspruch 1 mit mindestens einer Polymerverbindung vereinigt.

**18.** Verfahren zum Aufbringen einer flüssigen Zusammensetzung, bei dem man:

die flüssige Zusammensetzung nach Anspruch 13 auf einen Gegenstand aufbringt und danach härtet.

**19.** Gegenstand, der mit einer flüssigen Zusammensetzung nach Anspruch 13 beschichtet ist.

**20.** Verfahren nach Anspruch 8, **dadurch gekennzeichnet, daß** die Mahlapparatur eine Strahlmühle umfaßt.

**21.** Verfahren nach Anspruch 8, **dadurch gekennzeichnet, daß** es sich bei dem Betriebsmedium um Wasserdampf handelt.

**22.** Verfahren nach Anspruch 8, **dadurch gekennzeichnet, daß** die Mahlapparatur eine Fließbettgegenstrahlmühle umfaßt.

**23.** Verfahren nach Anspruch 11, bei dem man das Kation aus der Gruppe bestehend aus Mg2+, Ca2+,Ba2+, Sr2+ und Zn2+, Al3+ und Mischungen davon auswählt.

## Claims

1. **1.** Precipitated silica having the following properties:

    - a $d_{50}$-value of from 150 to 2000 nm;
    - a $d_{90}$-value of from 500 to 7000 nm;
    - a silanol group density of from 2.5 to 8 OH/nm$^2$; and
    - a modified tapped density of less than or equal to 70 g/l.

2. **2.** Precipitated silica according to Claim 1, **characterized in that** a surface of the precipitated silica is doped with at least one bivalent cation selected from the group consisting of $Mg^{2+}$, $Ca^{2+}$, $Ba^{2+}$, $Sr^{2+}$, $Zn^{2+}$ and mixtures thereof.

3. **3.** Precipitated silica according to Claim 1, **characterized in that** the BET-surface area of the precipitated silica is of from 100 to 350 m$^2$/g.

4. **4.** Precipitated silica according to Claim 1, **characterized in that** a loss on drying is of from 1.5 to 8% by weight and/or a loss on ignition is of from 1.5 to 9% by weight.

5. **5.** Precipitated silica according to Claim 1, **characterized in that** the silanol group density is of from 3.1 to 5 $OH_/nm^2$.

6. **6.** Precipitated silica according to Claim 1, **characterized in that** a pH-value is of from 4 to 9.

7. **7.** Precipitated silica according to Claim 1, **characterized in that** a $SiOH_{isolated}$-value is below 0.8.

8. **8.** Process for manufacture of a precipitated silica, comprising:

    milling and simultaneously classifying a precipitated silica having the following properties:
    a Sears number of from 10 to 30 ml/(5g),
    a BET-surface area of from 100 to 350 m$^2$/g,
    a loss on drying of from 2 to 8% by weight,
    a loss on ignition of from 2 to 9% by weight,
    a pH-value of from 4 to 9, and
    a DBP-value of from 230 to 400 g/100g,
    to obtain milled silica;
    said milling and simultaneous classifying being performed using a grinding apparatus;
    **characterized in that** a mill of the grinding apparatus is operated in a grinding phase with an operational medium selected from the group consisting of a gas, a vapor, steam, a gas comprising steam and mixtures thereof; and
    **in that** a grinding chamber is heated in a heating phase, i.e. before an actual operation with the operational medium, such that a temperature in the grinding chamber and/or at a mill outlet is higher than a dew point of the operational medium; and
    **in that** said milled silica is classified to a $d_{50}$-value of from 150 - 2000 nm and a $d_{90}$-value of from 500 - 7000 nm.

9. **9.** Process according to Claim 8, **characterized in that** grinding is carried out using a jet mill.

10. **10.** Process according to Claim 9, **characterized in that** said jet mill is a fluid-bed opposed-jet mill which is operated with steam as operational medium.

11. **11.** Process according to Claim 9, **characterized in that** the precipitated silica and at least one multivalent cation and/or $NH_3$ are brought into contact.

12. **12.** Process according to Claim 11, **characterized in that** the cation is a bivalent cation or a trivalent cation.

13. **13.** Liquid composition, comprising:

    at least one precipitated silica according to Claim 1.

14. **14.** Liquid composition according to Claim 13, which comprises a cured or uncured unsaturated polyester resin composition.

**15.** Liquid composition according to Claim 13, which is a colored composition.

**16.** Liquid composition according to Claim 13, comprising 0.1 to 15% by weight of said precipitated silica.

**17.** Process for manufacture of a liquid composition, comprising:

combining at least one precipitated silica according to Claim 1 with at least one polymer compound.

**18.** Process for applying a liquid composition, comprising:

applying the liquid composition of Claim 13 to an article, followed by curing.

**19.** Article coated with a liquid composition according to Claim 13.

**20.** Process according to Claim 8, **characterized in that** said grinding apparatus comprises a jet mill.

**21.** Process according to Claim 8, **characterized in that** said operational medium is steam.

**22.** Process according to Claim 8, **characterized in that** said grinding apparatus comprises a fluid-bed opposed-jet mill.

**23.** Process according to Claim 11, wherein the cation is selected from the group consisting of $Mg^{2+}$, $Ca^{2+}$, $Ba^{2+}$, $Sr^{2+}$ and $Zn^{2+}$, $Al^{3+}$ and mixtures thereof.

**Revendications**

**1.** Acide silicique précipité ayant les propriétés suivantes :

- une valeur $d_{50}$ de 150 à 2 000 nm ;
- une valeur $d_{90}$ de 500 à 7 000 nm ;
- une densité de groupes silanol de 2,5 à 8 OH/nm$^2$ ; et
- une densité apparente modifiée inférieure à 70 g/l.

**2.** Acide silicique précipité selon la revendication 1, **caractérisé en ce que** la surface de l'acide silicique est dotée d'au moins un cation divalent choisi dans le groupe constitué par $Mg^{2+}$, $Ca^{2+}$, $Ba^{2+}$, $Sr^{2+}$, $Zn^{2+}$ et des mélanges de ceux-ci .

**3.** Acide silicique précipité selon la revendication 1, **caractérisé en ce que** la surface BET de l'acide silicique précipité vaut de 100 à 350 m$^2$/g.

**4.** Acide silicique précipité selon la revendication 1, **caractérisé en ce que** la perte au séchage vaut de 1,5 à 8 % en poids et/ou la perte à la calcination vaut de 1,5 à 9 % en poids.

**5.** Acide silicique précipité selon la revendication 1, **caractérisé en ce que** la densité des groupes silanol vaut de 3,1 à 5 OH/nm$^2$.

**6.** Acide silicique précipité selon la revendication 1, **caractérisé en ce que** le pH vaut de 4 à 9.

**7.** Acide silicique précipité selon la revendication 1, **caractérisé en ce que** l'indice $SiOH_{isolé}$ est inférieur à 0, 8 .

**8.** Procédé pour la préparation d'un acide silicique, dans lequel on broie et en même temps passe au crible :

un acide silicique précipité ayant les propriétés suivantes :
un indice de Sears de 10 à 30 ml (5 g),
une surface BET de 100 à 350 m$^2$/g,
une perte au séchage de 2 à 8 % en poids,

une perte à la calcination de 2 à 9 % en poids,
un pH de 4 à 9 et
un indice DBP de 230 à 400 g/100 g,
pour obtenir un acide silicique broyé ;
le broyage et le criblage simultané étant effectués avec utilisation d'un appareil de broyage ;
**caractérisé en ce qu'**on fait fonctionner un broyeur de l'appareil de broyage dans une phase de broyage avec un agent de fonctionnement choisi dans le groupe consistant en un gaz, une vapeur, de la vapeur d'eau, un gaz contenant de la vapeur d'eau et des mélanges de ceux-ci ; et
**en ce que** dans une phase de chauffage, c'est-à-dire avant le fonctionnement proprement dit avec l'agent de fonctionnement, on chauffe une chambre de broyage de manière que la température dans la chambre de broyage et/ou à la sortie du broyeur soit supérieure au point de rosée de l'agent de fonctionnement ; et
**en ce qu'**on passe au crible l'acide silique broyé, jusqu'à une valeur $d_{50}$ de 150 - 2 000 et une valeur $d_{90}$ de 500 - 7 000 nm.

**9.** Procédé selon la revendication 8, **caractérisé en ce qu'**on effectue le broyage en utilisant un broyeur à jet.

**10.** Procédé selon la revendication 9, **caractérisé en ce que** le broyeur à jet consiste en un broyeur à jet et lit fluidisé opposé, qui est utilisé avec de la vapeur d'eau en tant que milieu de fonctionnement.

**11.** Procédé selon la revendication 9, **caractérisé en ce qu'**on met en contact l' acide silicique précipité et au moins un cation plurivalent et/ou $NH_3$.

**12.** Procédé selon la revendication 11, **caractérisé en ce que** le cation consiste en un cation divalent ou trivalent.

**13.** Composition liquide, contenant :

au moins un acide silicique précipité selon la revendication 1.

**14.** Composition liquide selon la revendication 13, qui contient une composition de résine polyester insaturé durcie ou non durcie.

**15.** Composition liquide selon la revendication 13, qui consiste en une composition colorée.

**16.** Composition liquide selon la revendication 13, qui contient 0,1 à 15 % en poids de l'acide silicique précipité.

**17.** Procédé pour la préparation d'une composition liquide, dans lequel on :

réunit au moins un acide silicique précipité selon la revendication 1 avec au moins un composé polymère.

**18.** Procédé pour l'application d'une composition liquide, dans lequel on :

applique sur un article la composition liquide selon la revendication 13 et ensuite on la fait durcir.

**19.** Article, qui est revêtu avec une composition liquide selon la revendication 13.

**20.** Procédé selon la revendication 8, **caractérisé en ce que** l'appareil de broyage est un broyeur à jet.

**21.** Procédé selon la revendication 8, **caractérisé en ce que** le milieu de fonctionnement consiste en vapeur d'eau.

**22.** Procédé selon la revendication 8, **caractérisé en ce que** l'appareil de broyage comprend un broyeur à jet et lit fluidisé opposé.

**23.** Procédé selon la revendication 11, dans lequel le cation est choisi dans le groupe constitué par $Mg^{2+}$, $Ca2^{+}$, $Ba^{2+}$, $Sr^{2+}$ et $2n^{2+}$, $Al^{3+}$ et des mélanges de ceux-ci .

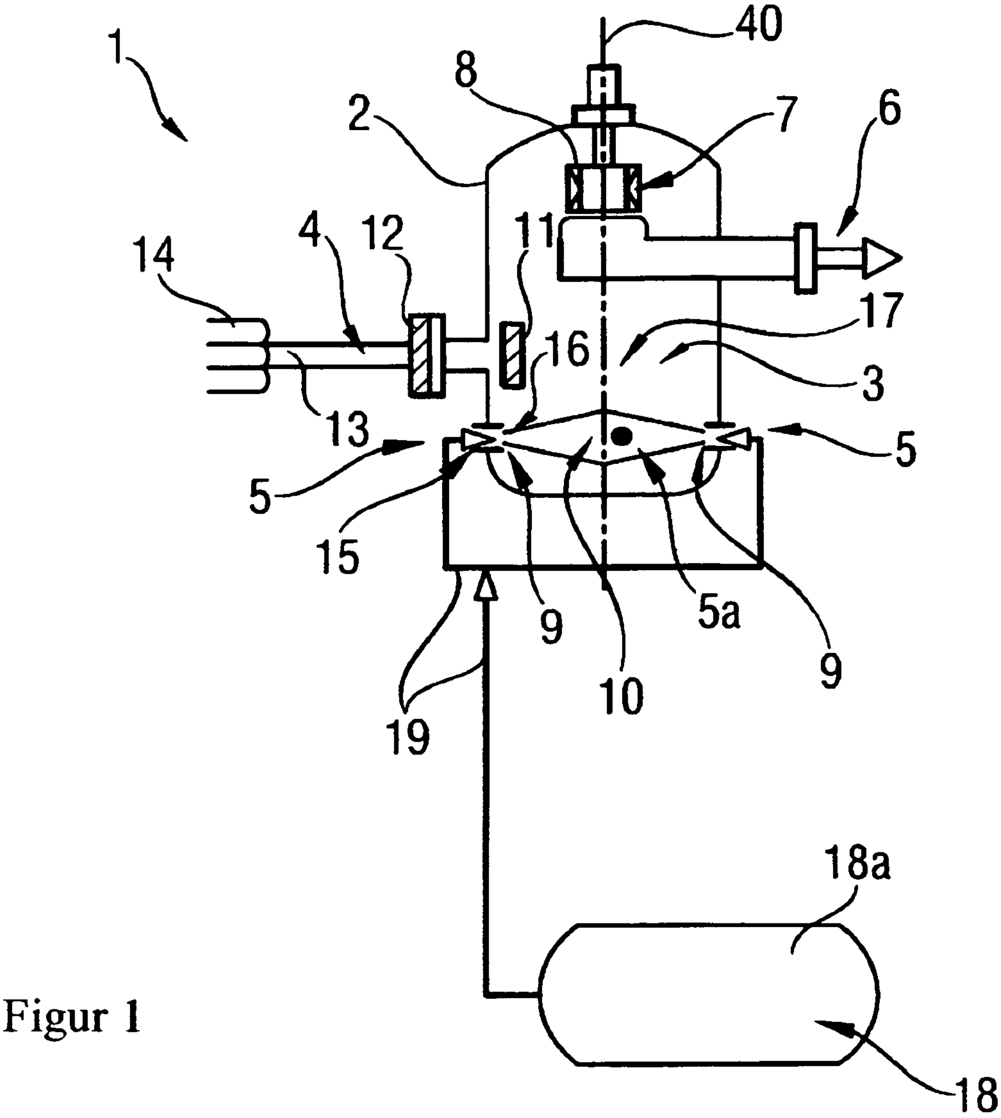


Figur 1

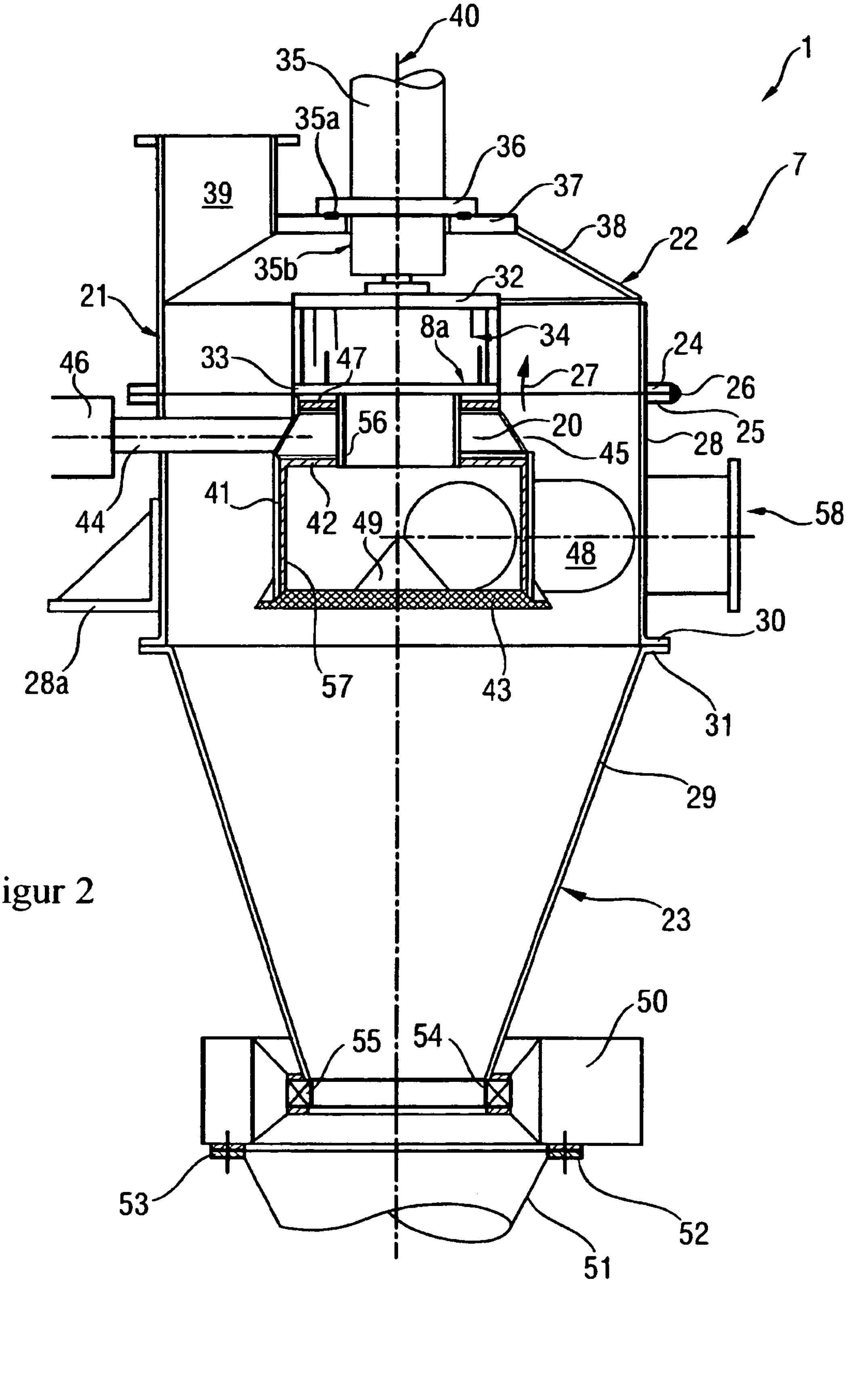
40
1
35
35a
36
37
38
22
7
39
35b
32
21
8a
34
24
46
33
47
27
26
56
20
25
28
45
41
42
49
58
44
48
30
28a
57
43
31
29
23
50
55
54
53
52
51

Figur 2

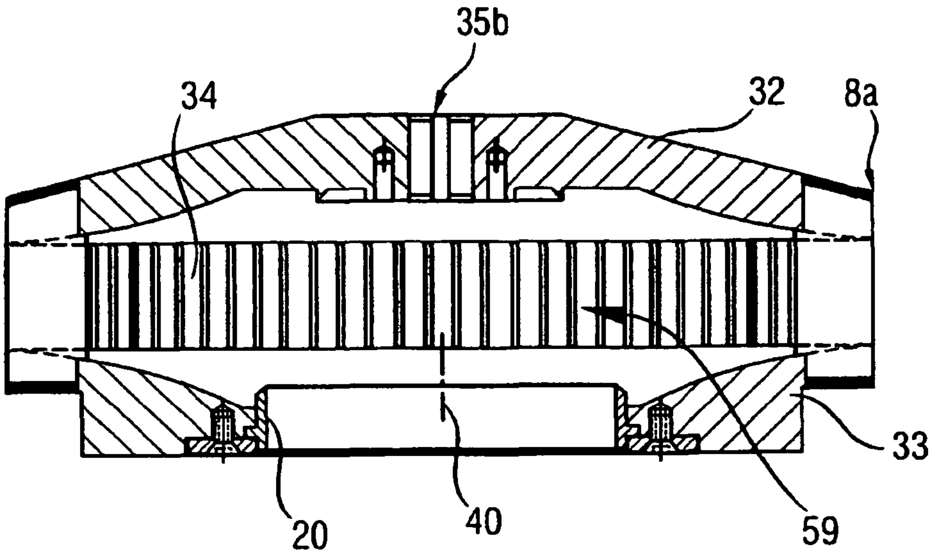


Figur 3

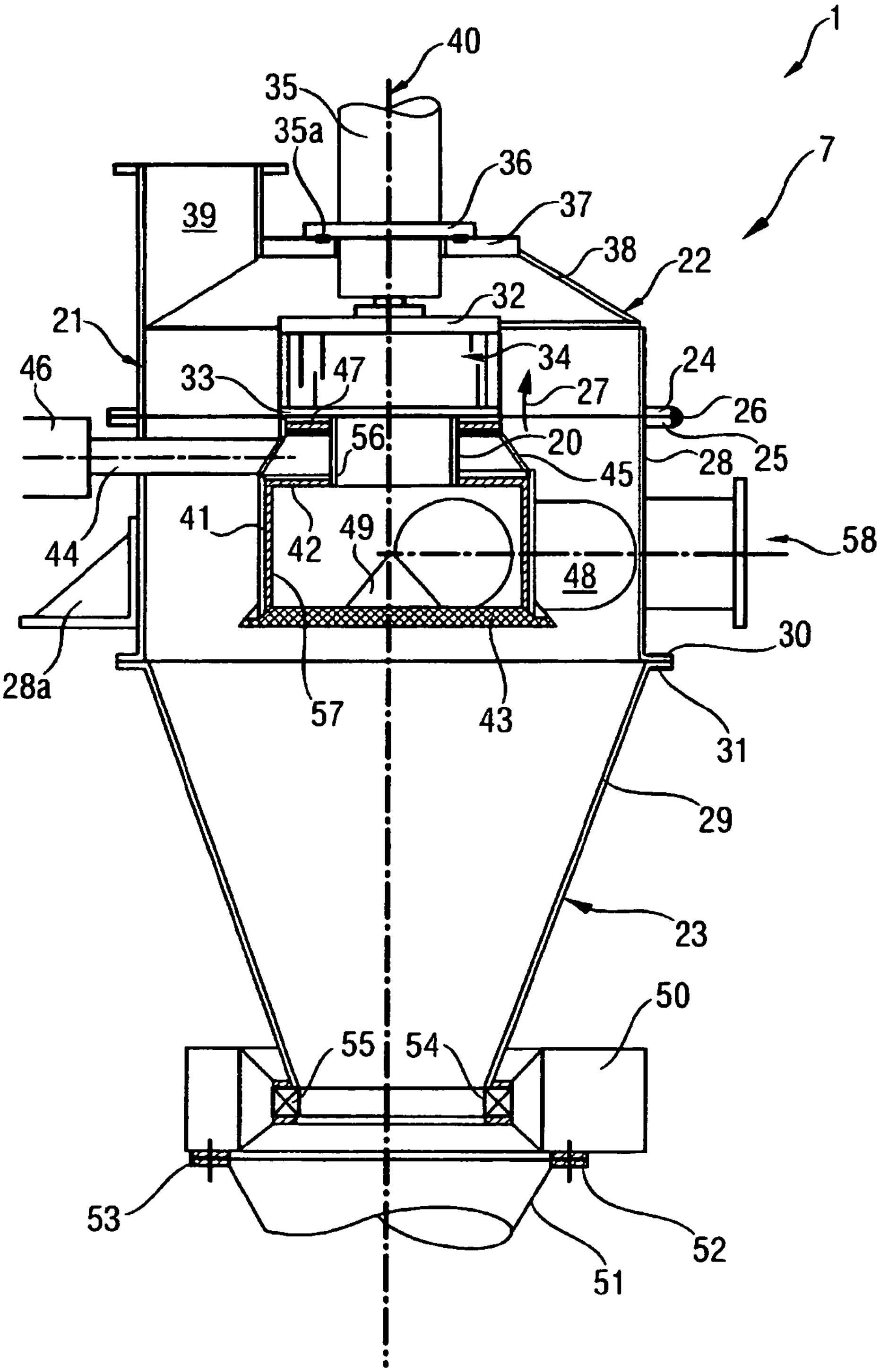
1
7
40
35
35a
36
37
38
22
39
32
21
34
24
46
33
47
27
26
56
20
25
45
28
41
42
49
58
44
48
28a
57
43
30
31
29
23
50
55
54
53
52
51

Figur 4

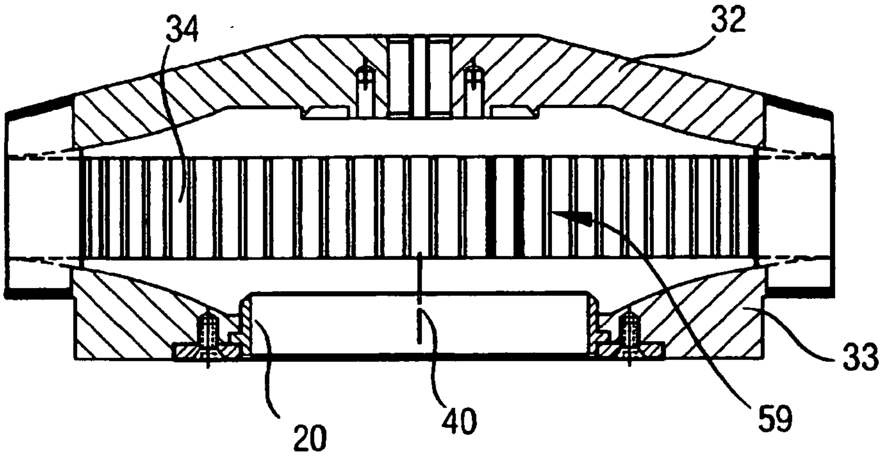


Figur 5

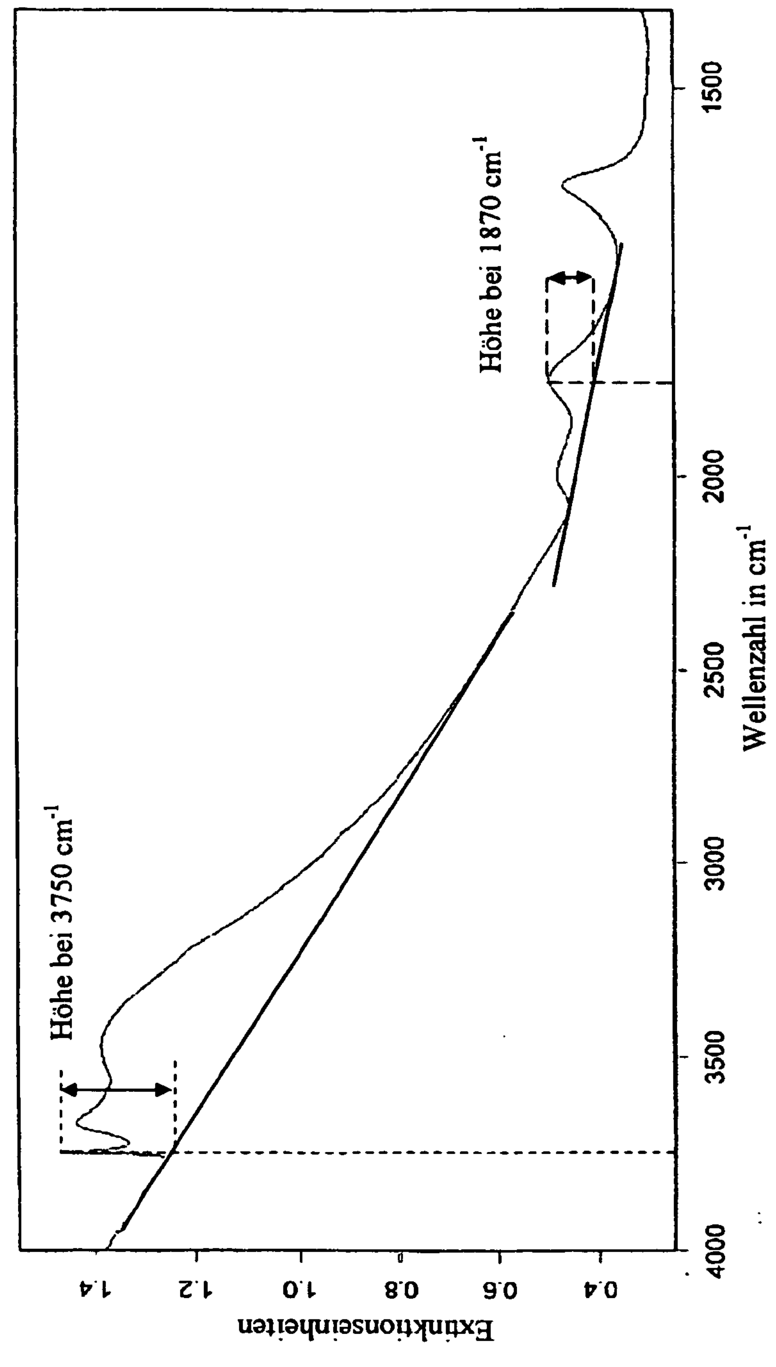

Höhe bei 3750 cm$^{-1}$
Höhe bei 1870 cm$^{-1}$
Extinktionseinheiten
1.4
1.2
1.0
0.8
0.6
0.4
Wellenzahl in cm$^{-1}$
4000
3500
3000
2500
2000
1500


Figur 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4497918 A
- US 200710001343 A
- EP 1561727 A
- DE 102005005046
- DE 1020060488504
- DE 102006024591
- DE 102007004757
- EP 0472930 B1
- DE 19824062 A1
- US 4742121 A
- US 5567767 A
- US 5571863 A
- US 5688867 A
- US 5777053 A
- US 5874503 A
- US 6063864 A
- WO 94107674AL A
- WO 00123495 A1
- WO 031101918 A2
- US 20060167208 A1
- US PS5874503 A

### In der Beschreibung aufgeführte Nicht-Patentliteratur

- Modern Plastics Encyclopedia. 1977, 65-66
- MODERN PLASTICS ENCYCLOPEDIA. 1978, 56-59
- **CONNOLLY.** Modern Plastics Encyclopedia. 1975, 61-62